# EUROPEAN PATENT SPECIFICATION

(11) **EP 3 822 230 B1**
(45) Date of publication and mention of the grant of the patent: **18.12.2024**
(21) Application number: 19834422.8
(22) Date of filing: 11.07.2019
(51) Int. Cl.: C02F 1/461, C25B 9/00, C25B 9/23, C25B 15/08, C25B 1/13

(54) **ELECTROLYZED LIQUID GENERATOR**
GENERATOR VON ELEKTROLYSIERTER FLÜSSIGKEIT
GÉNÉRATEUR DE LIQUIDE ÉLECTROLYSÉ

(30) Priority: 13.07.2018 JP 2018133658; 13.07.2018 JP 2018133659
(43) Date of publication of application: 19.05.2021
(73) Proprietor: Panasonic Intellectual Property Management Co., Ltd., Osaka-shi, Osaka 540-6207 (JP)
(72) Inventor: INAGAKI, Kenichiro, Osaka-shi, Osaka 540-6207 (JP); YAMAGUCHI, Tomohiro, Osaka-shi, Osaka 540-6207 (JP); IMAHORI, Osamu, Osaka-shi, Osaka 540-6207 (JP); MORI, Shunsuke, Osaka-shi, Osaka 540-6207 (JP); NAGATA, Minoru, Osaka-shi, Osaka 540-6207 (JP)
(74) Representative: Grünecker Patent- und Rechtsanwälte PartG mbB
(86) International application number: PCT/JP2019/027433
(87) International publication number: WO 2020/013255

(56) References cited:
- WO-A1-2016/047055
- WO-A1-2017/054392
- WO-A1-2017/168475
- JP-A- 2002 292 370
- JP-A- 2008 189 968
- JP-A- 2012 012 695
- US-A1- 2016 362 310

## Description

### TECHNICAL FIELD

The present invention relates to an electrolyzed liquid generator.

### BACKGROUND ART

There is known an electrolyzed liquid generator having an electrolytic part in which an anode, a conductive film, and a cathode are stacked, the electrolytic part generating ozone (electrolytic product) to provide ozone water (electrolytic liquid) (see, for example, JP 2017 176993 A and WO 2017/168475 A1).

The electrolytic part described in JP 2017 176993 A and WO 2017/168475 A1 has a groove in which a hole formed in the cathode as an electrode and a hole formed in the conductive film communicate with each other. Then, by applying a voltage to the electrolytic part, water introduced into the groove is electrolyzed to generate ozone.

### SUMMARY OF THE INVENTION

In the above known art, the electrolytic part is accommodated in a housing with an outer periphery in contact with an inner surface of the housing.

However, although the outer periphery of the electrolytic part is in contact with the inner surface of the housing, a minute gap is formed between the outer periphery of the electrolytic part and the inner surface of the housing due to disposition during stacking. Thus, there is a possibility that water may enter and stay in the minute gap formed around the electrolytic part.

When water is electrolyzed to generate ozone with water staying around the electrolytic part in this way, a pH value of the water accumulated around the electrolytic part rises, scale mainly including a calcium component is likely to occur, and the scale may accumulate in the minute gap.

If the scale generated by electrolysis of the water accumulates in the minute gap formed around the electrolytic part, the housing and the electrolytic part may be compressed and deformed by the scale accumulated in the minute gap.

Thus, the present invention allows for obtaining an electrolyzed liquid generator capable of suppressing pressure on a housing and an electrolytic part by scale.

The electrolyzed liquid generator of the present invention comprises an electrolytic part having a stacked body in which a conductive film is stacked to be interposed between a cathode and an anode and a housing in which the electrolytic part is disposed, the electrolytic part being configured to electrolyze a liquid.

The housing includes a channel having an inlet port into which a liquid supplied to the electrolytic part flows and an outlet port from which an electrolyzed liquid generated in the electrolytic part flows out, and having a liquid flow direction in a direction intersecting a stacking direction of the stacked body.

The electrolytic part includes a groove opening to the channel and having an interface between the conductive film and the cathode and an interface between the conductive film and the anode, the interfaces at least partially being exposed.

The electrolyzed liquid generator according to the present invention has a space between at least one of an outer periphery of the cathode and an outer periphery of the anode, and an inner surface of the housing when viewed along the fliquid flow direction, wherein the outer periphery of the cathode is a side surface of the cathode and the outer periphery of the anode is a side surface of the anode.

The present invention makes it possible to obtain the electrolyzed liquid generator capable of suppressing pressure on the housing and the electrolytic part by scale.

### BRIEF DESCRIPTION OF DRAWINGS

FIG. 1 is an exploded perspective view of an electrolyzed water generator according to one exemplary embodiment of the present disclosure.
FIG. 2 is a sectional view of the electrolyzed water generator according to one exemplary embodiment of the present disclosure, cut along a plane orthogonal to a liquid flow direction.
FIG. 3 is an enlarged sectional view of a part of an electrolytic part according to one exemplary embodiment of the present disclosure in which a conductive film groove is formed.
FIG. 4 is a partially enlarged plan view showing a state in which an anode is stacked on a feeder according to one exemplary embodiment of the present disclosure.
FIG. 5 is a partially enlarged plan view showing a state in which a conductive film is stacked on an anode according to one exemplary embodiment of the present disclosure.
FIG. 6 is a partially enlarged plan view showing a state in which a cathode is stacked on the conductive film according to one exemplary embodiment of the present disclosure.
FIG. 7 is a partially enlarged view of an electrolyzed water generator according to a first modification of the present disclosure, and is a sectional view corresponding to FIG. 3.
FIG. 8 is a partially enlarged view of an electrolyzed water generator according to a second modification of the present disclosure, and is a sectional view corresponding to FIG. 3.
FIG. 9 is a partially enlarged view of an electrolyzed water generator according to a third modification of the present disclosure, and is a sectional view corresponding to FIG. 3.
FIG. 10 is a partially enlarged view of an electrolyzed water generator according to a fourth modification of the present disclosure, and is a sectional view corresponding to FIG. 3.
FIG. 11 is a partially enlarged view of an electrolyzed water generator according to a fifth modification, and is a sectional view corresponding to FIG. 3.
FIG. 12 is an enlarged view showing a part where the conductive film groove of the electrolytic part according to one exemplary embodiment of the present disclosure is formed.
FIG. 13 is an enlarged plan view showing a state in which the conductive film is stacked on the anode according to one exemplary embodiment of the present disclosure.
FIG. 14 is an enlarged plan view showing a state in which the cathode is stacked on the conductive film according to one exemplary embodiment of the present disclosure.
FIG. 15 is a view showing a state in which the conductive film is displaced relative to the cathode in the liquid flow direction according to one exemplary embodiment of the present disclosure, and is a plan view corresponding to FIG. 14.
FIG. 16 is a view showing a state in which the conductive film is displaced relative to the cathode in a width direction according to one exemplary embodiment of the present disclosure, and is a plan view corresponding to FIG. 14.

### DESCRIPTION OF EMBODIMENTS

Hereinafter, exemplary embodiments of the present disclosure will be described with reference to the drawings. Note that the present disclosure is not limited by the exemplary embodiments.

In the following, as an electrolyzed liquid generator, an example of an ozone water generator that generates ozone (electrolytic product) and dissolves the ozone in water (liquid) to generate ozone water (electrolyzed water: electrolyzed liquid).

Ozone water, which is effective for sterilization and decomposition of organic substances, is widely used in the fields of water treatment, food, and medicine, and has the advantage of being non-persistent and producing no byproducts.

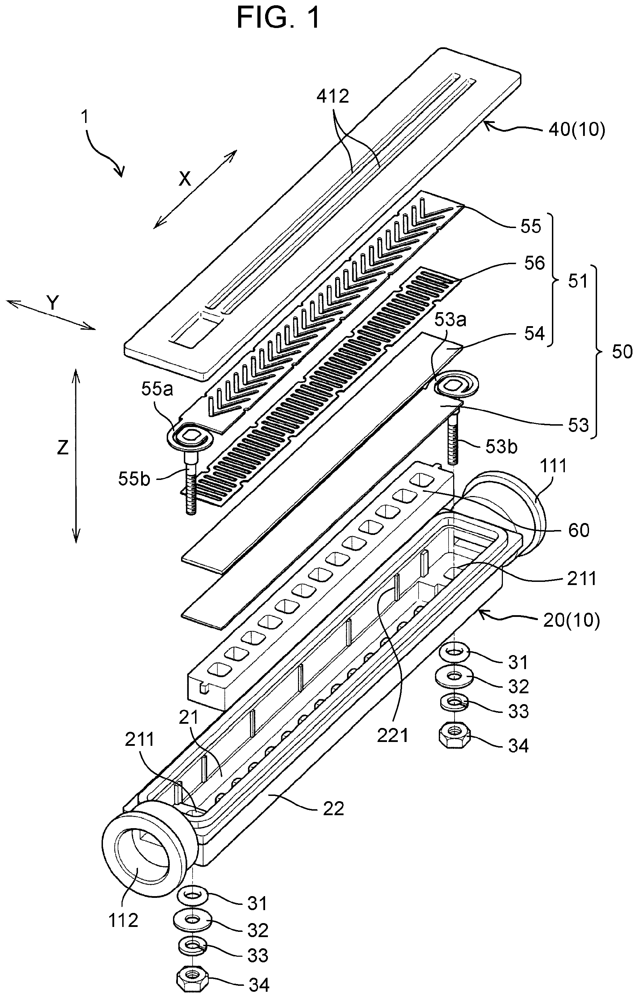

Further, in the following description, an extending direction of a channel (a direction in which the liquid flows) is X, a width direction of the channel (a direction across the liquid flow direction) is Y, a direction in which electrodes and a conductive film are stacked is stacking direction Z (see FIG. 1).

In the following exemplary embodiments, the stacking direction Z is a vertical direction in which the electrolyzed liquid generator is disposed such that an electrode case lid is on an upper side.

### (First exemplary embodiment)

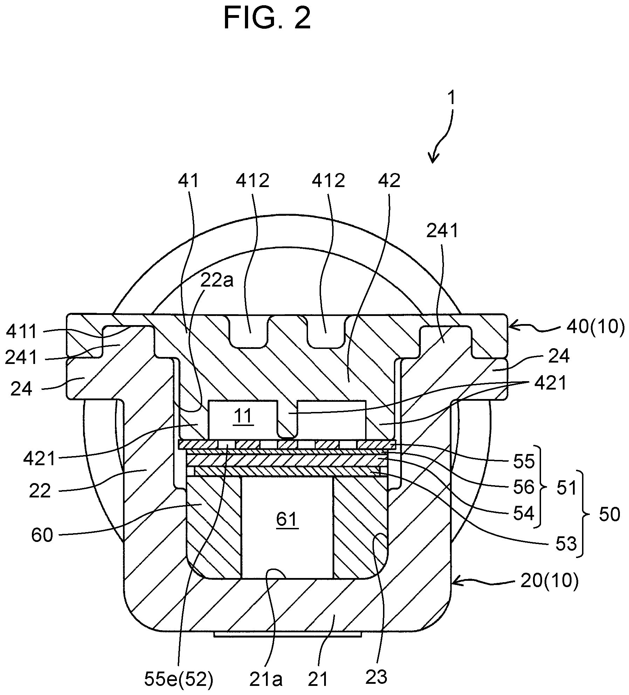

As shown in FIGS. 1 and 2, ozone water generator 1 according to the present exemplary embodiment has housing 10, and channel 11 is formed inside housing 10 (see FIG. 2).

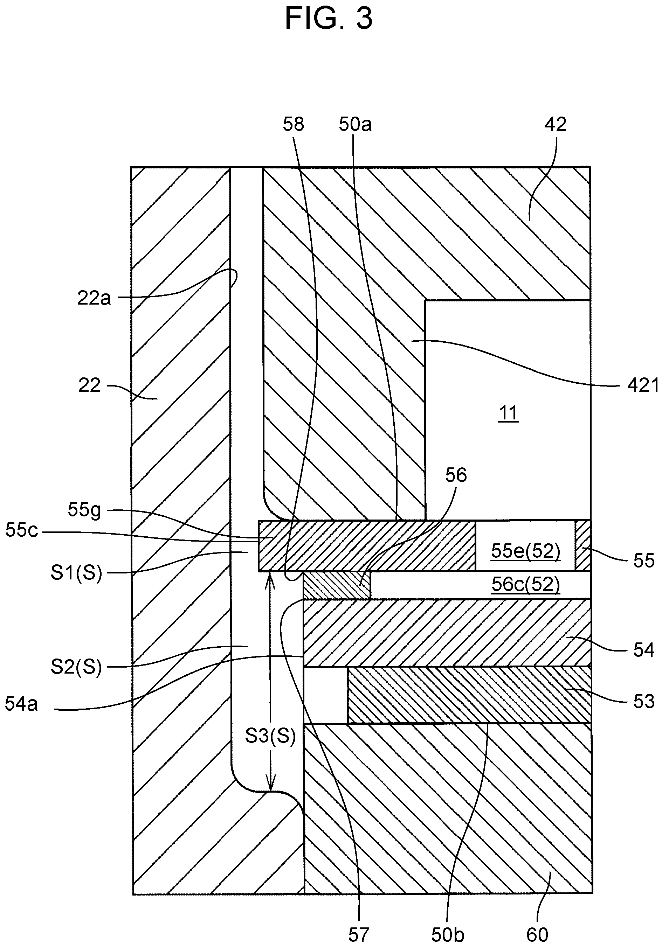

Inside housing 10 in which channel 11 is formed, electrolytic part 50 is disposed so as to face channel 11. Then, water flowing through channel 11 is electrolyzed by electrolytic part 50. In the present exemplary embodiment, as shown in FIGS. 2 and 3, electrolytic part 50 is disposed in housing 10 such that upper surface (one surface in stacking direction Z) 50a faces channel 11.

As shown in FIGS. 1 and 2, electrolytic part 50 has stacked body 51. Stacked body 51 has anode (electrode) 54, cathode (electrode) 55, and conductive film 56. Conductive film 56 is stacked to be interposed between anode (electrode) 54 and cathode (electrode) 55, that is, between a plurality of electrodes adjacent to each other.

Channel 11 includes inlet port 111 in which the liquid supplied to electrolytic part 50 flows, and outlet port 112 from which the ozone water generated by electrolytic part 50 flows out. Channel 11 is formed in housing 10 such that liquid flow direction X intersects stacking direction Z of stacked body 51.

Further, in stacked body 51, a plurality of grooves 52 is formed. The plurality of grooves 52 is open to channel 11, and interface 57 and interface 58 between conductive film 56 and the plurality of electrodes (anode 54 and cathode 55) are at least partially exposed (see FIG. 3). It is sufficient that at least one groove 52 is formed in stacked body 51.

Grooves 52 formed in stacked body 51 allow the water supplied into channel 11 from inlet port 111 to be introduced into grooves 52. Then, the water introduced into grooves 52 is electrolyzed to cause an electrochemical reaction, and ozone water in which ozone is dissolved as an electrolytic product is generated.

Housing 10 is formed using, for example, a non-conductive resin such as polyphenylene sulfide (PPS). In the present exemplary embodiment, housing 10 includes electrode case 20 and electrode case lid 40. Electrode case 20 is provided with recess 23 opening upward and accommodating electrolytic part 50. Electrode case lid 40 covers an opening of electrode case 20.

As shown in FIG. 1, electrode case 20 includes bottom wall 21 and peripheral wall 22 connected to a peripheral edge of bottom wall 21, and has a substantially box shape opening upward. That is, recess 23 opening upward and defined by inner surface 21a of bottom wall 21 and inner surface 22a of peripheral wall 22 is formed in electrode case 20.

Then, electrolytic part 50 is introduced into recess 23 from the opening (from above), and electrolytic part 50 is accommodated in recess 23. The opening of recess 23 is formed so as to be larger than a contour of electrolytic part 50 when viewed along stacking direction Z. Electrolytic part 50 whose stacking direction coincides with the vertical direction (stacking direction Z) can be inserted into recess 23 in the same attitude.

Further, in the present exemplary embodiment, electrolytic part 50 is accommodated in recess 23 via elastic body 60. That is, electrolytic part 50 is accommodated in recess 23 with elastic body 60 interposed between electrolytic part 50 and electrode case 20 and with elastic body 60 in contact with lower surface 50b of electrolytic part 50. Elastic body 60 is formed using elastic materials such as rubber, plastic, and metal springs.

In the present exemplary embodiment, when electrode case lid 40 is attached to electrode case 20, channel 11 is formed between electrolytic part 50 and electrode case lid 40. Channel 11 may be formed such that a sectional area (an area of channel 11 cut at a plane orthogonal to liquid flow direction X) at a part facing electrolytic part 50 is preferably substantially identical at a plurality of positions.

Electrode case lid 40 includes a lid body 41 having a substantially rectangular plate shape, and protrusion 42 protruding downward from a lower center of lid body 41 and inserted into recess 23 of electrode case 20.

Fitting recess 411 for welding is formed on an entire peripheral edge of protrusion 42 of lid body 41. Then, when electrode case lid 40 is attached to electrode case 20, fitting protrusion 241 for welding formed around an entire periphery of the opening of electrode case 20 is inserted into fitting recess 411 (see FIG. 2).

In the present exemplary embodiment, flange 24 extending substantially horizontally toward the outside is continuously provided entirely at an upper end of peripheral wall 22 of electrode case 20. Fitting protrusion 241 protruding upward is formed on flange 24 so as to surround the opening of electrode case 20. Then, electrode case lid 40 and electrode case 20 are welded in a state where fitting protrusion 241 is inserted into fitting recess 411 while protrusion 42 is inserted into recess 23.

Electrode case lid 40 can be also attached to electrode case 20 by screwing electrode case lid 40 to electrode case 20 with a sealing material interposed between electrode case lid 40 and electrode case 20.

Further, protruding parts 421 pressing electrolytic part 50 downward are formed at both ends and a center in width direction Y on a lower surface of protrusion 42. Electrolytic part 50 is accommodated in recess 23 via elastic body 60, and electrode case lid 40 is attached to electrode case 20. At this time, electrolytic part 50 is pressed downward by protruding parts 421 provided on electrode case lid 40.

As described above, in the present exemplary embodiment, when electrolytic part 50 is pressed downward, a constant pressure is applied entirely to electrolytic part 50 by elastic body 60. This can further enhance adhesion of each member configuring electrolytic part 50.

In the present exemplary embodiment, elastic body 60 is provided with a plurality of through-holes 61 penetrating in stacking direction Z along a longitudinal direction (liquid flow direction X). As a result, elastic body 60 can be deformed toward through-holes 61 when pressed by electrolytic part 50. Deforming elastic body 60 toward through-holes 61 in this way suppresses a compression of electrode case 20 by elastic body 60 pressed by electrolytic part 50.

In the present exemplary embodiment, groove 412 is provided on an upper surface of lid body 41. This groove 412 can be used for positioning and preventing catch and reverse insertion when ozone water generator 1 is fixed. By providing groove 412, ozone water generator 1 can be incorporated into a device that needs ozone generation more easily and without mistakes.

Ozone water generator 1 is used while incorporated in other equipment and facilities. Upon incorporation of ozone water generator 1 into other equipment and facilities, ozone water generator 1 is preferably disposed in an upright position such that inlet port 111 is at a bottom and outlet port 112 is at a top. Such ozone water generator 1 disposed with the inlet port at the bottom and the outlet port at the top allows the ozone generated at an electrode interface to be quickly separated from the electrode interface by buoyancy. That is, the ozone generated at the electrode interface can be quickly separated from the electrode interface before bubble growth. This allows the ozone to be easily dissolved in water and improves generation efficiency of the ozone water. The disposition of ozone water generator 1 is not limited to this, but ozone water generator 1 can be disposed as appropriate.

Next, a specific configuration of electrolytic part 50 will be described.

Electrolytic part 50 has a substantially rectangular shape in which liquid flow direction X is the longitudinal direction in a plan view (as viewed from stacking direction Z). Electrolytic part 50 includes stacked body 51 configured by sequentially stacking anode 54, conductive film 56, and cathode 55. As described above, in the present exemplary embodiment, stacked body 51 is stacked such that conductive film 56 is interposed between anode 54 and cathode 55, which are a plurality of electrodes adjacent to each other.

Feeder 53 is stacked on a lower side of anode 54, and electricity is supplied to anode 54 via feeder 53.

In the present exemplary embodiment, feeder 53, anode 54, conductive film 56, and cathode 55 all have a rectangular plane shape in a plan view, with liquid flow direction X as the longitudinal direction and width direction Y as a lateral direction, and have a flat plate shape with a thickness in stacking direction Z. At least one of anode 54 and cathode 55 may be film-like, mesh-like or linear.

Feeder 53 can be formed by using, for example, titanium. Feeder 53 is in contact with an opposite side of anode 54 of a side where anode 54 is in contact with conductive film 56. Further, feed shaft 53b for the anode is electrically connected to a first end of feeder 53 in the longitudinal direction (upstream in liquid flow direction X) via spiral spring 53a. Feed shaft 53b is inserted into through-hole 211 formed on a first end in liquid flow direction X of bottom wall 21. A part of feed shaft 53b protruding to the outside of electrode case 20 is electrically connected to a positive electrode of a power supply unit (not shown).

Anode 54 is formed, for example, by forming a conductive diamond film on a conductive substrate formed by using silicon and having a width of about 10 mm and a length of about 100 mm. Further, for example, two conductive substrates having a width of about 10 mm and a length of about 50 mm may be arranged side by side. The conductive diamond film has boron doped conductivity. The conductive diamond film is formed on the conductive substrate with a film thickness of about 3 pm by a plasma chemical vapor deposition (CVD) method.

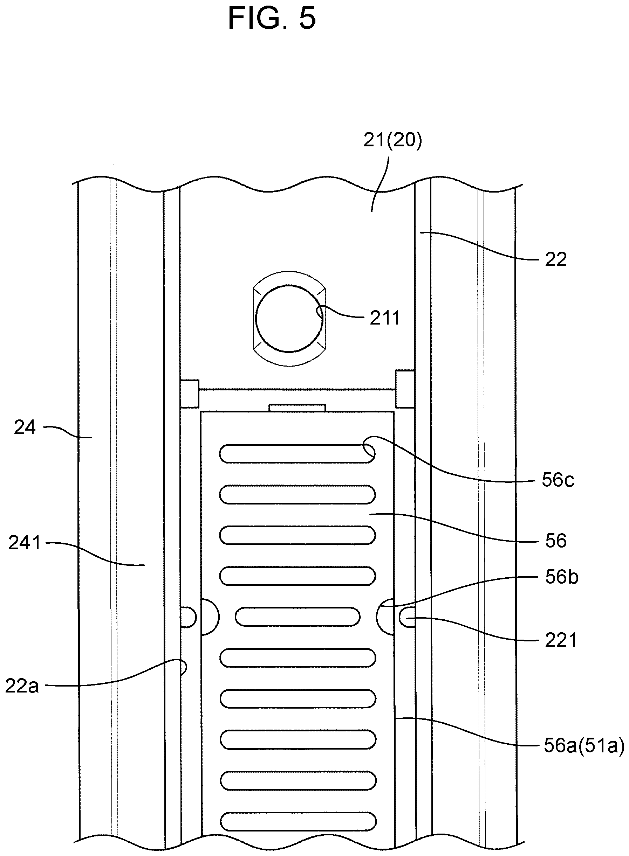

Conductive film 56 is disposed on anode 54 on which the conductive diamond film is formed. Conductive film 56 is a proton conductive ion exchange film and has a thickness of about 100 pm to 200 pm inclusive. Conductive film 56 is provided with a plurality of conductive film holes (conductive film grooves) 56c penetrating in a thickness direction (stacking direction Z) (see FIG. 5).

In the present exemplary embodiment, each conductive film hole 56c has a substantially identical shape. Specifically, each conductive film hole 56c has an elongated hole shape elongated in width direction Y The plurality of conductive film holes 56c is provided so as to be aligned in a row at a predetermined pitch along the longitudinal direction (liquid flow direction X). A shape and arrangement of conductive film holes 56c may be different from an example shown in FIG. 5. Further, it is sufficient that at least one conductive film hole 56c is formed.

Cathode 55 is disposed on conductive film 56. Cathode 55 is formed by, for example, a titanium electrode plate having a thickness of about 0.5 mm. Further, feed shaft 55b for the cathode is electrically connected to a second end of cathode 55 in the longitudinal direction (downstream in liquid flow direction X) via spiral spring 55a. Feed shaft 55b is inserted into through-hole 211 formed on a second end in liquid flow direction X of bottom wall 21. Apart of feed shaft 55b protruding to the outside of electrode case 20 is electrically connected to a negative electrode of a power supply unit (not shown).

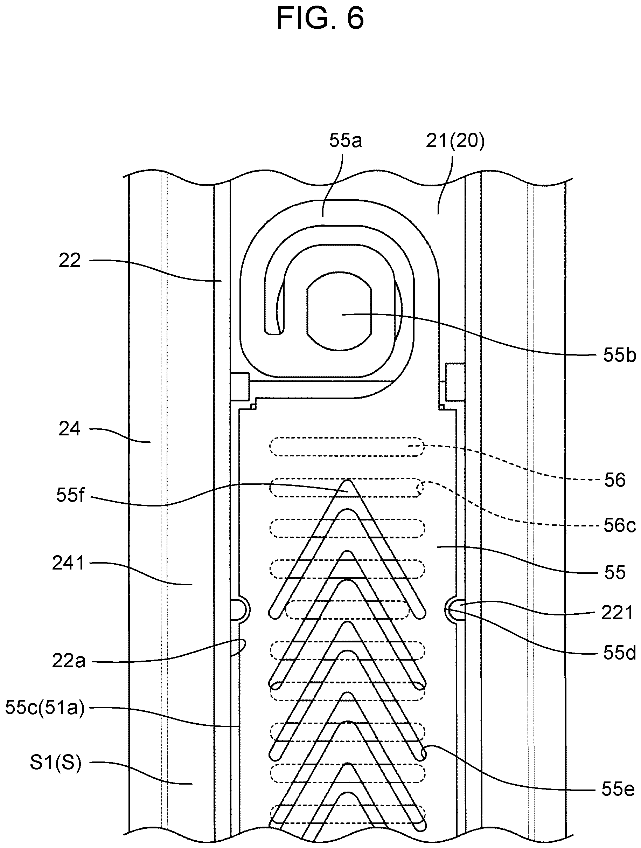

Further, a plurality of cathode holes (cathode grooves: electrode grooves) 55e penetrating in the thickness direction is formed in cathode 55 (see FIG. 6). In the present exemplary embodiment, each cathode hole 55e has a substantially identical shape. Specifically, each cathode hole 55e has a V-shape in which bent part 55f is disposed downstream in a plan view.

The plurality of cathode holes 55e is provided so as to be aligned in a row at a predetermined pitch along the longitudinal direction (liquid flow direction X).

The pitch of cathode holes 55e may be identical to the pitch of conductive film holes 56c, or may be different from the pitch of conductive film holes 56c. Further, a shape and arrangement of cathode holes 55e may be different from those of an example of FIG. 6. Further, it is sufficient that at least one cathode hole 55e is formed.

As described above, in the present exemplary embodiment, the shapes (at least one of contour or size) of conductive film holes 56c and cathode holes 55e are different in a plan view (as viewed along stacking direction of stacked body 51). Thus, even if conductive film 56 is displaced relative to cathode (electrode) 55 in a direction intersecting stacking direction Z, a contact area between conductive film 56 and cathode (electrode) 55 can be prevented from changing. The shapes (contour and size) of conductive film holes 56c and cathode holes 55e in a plan view can be identical.

Further, when conductive film 56 and cathode 55 are stacked, at least a part of mutual holes (cathode holes 55e and conductive film holes 56c) needs to communicate with each other, and a sufficient electrical contact area needs to be secured. As long as the above conditions are satisfied, conductive film 56 and cathode 55 may have an identical or different projection dimension (size in a plan view).

In the present exemplary embodiment, cathode 55 has a larger width in width direction Y than conductive film 56 (see FIG. 3).

The projection dimension of anode 54 may be identical to or different from at least one of conductive film 56 or cathode 55. However, anode 54 is preferably large enough to close conductive film holes 56c from below when anode 54 is stacked.

In the present exemplary embodiment, anode 54 and conductive film 56 have a substantially identical projection dimension.

Further, feeder 53 is preferably capable of efficiently supplying electricity to anode 54, and elastic body 60 preferably has such a projection dimension as to be pressed by entire lower surface of feeder 53 (lower surface 50b of electrolytic part 50).

In the present exemplary embodiment, a dimension of feeder 53 in width direction Y is smaller than those of anode 54 and conductive film 56, and a projection dimension of elastic body 60 in width direction Y is approximately identical to those of anode 54 and conductive film 56. The projection dimensions of feeder 53 and elastic body 60 can be varied.

Electrolytic part 50 having such a configuration can be accommodated in recess 23 of electrode case 20 by the following method, for example.

First, feeder 53 is disposed on elastic body 60 inserted in recess 23 of electrode case 20. Specifically, feeder 53 is inserted into recess 23 of electrode case 20 with a tip of feed shaft 53b facing downward. Then, feeder 53 is stacked on elastic body 60 by inserting feed shaft 53b into first through-hole 211.

Next, anode 54 is inserted into recess 23 of electrode case 20 and stacked on feeder 53.

Next, conductive film 56 is inserted into recess 23 of electrode case 20 and stacked on anode 54.

Next, cathode 55 is inserted into recess 23 of electrode case 20 with the tip of feed shaft 55b facing downward, feed shaft 55b is inserted into second through-hole 211, and cathode 55 is stacked on conductive film 56.

Next, O-ring 31, first washer 32, second washer 33, and hexagon nut 34 are each inserted into the part of feed shaft 53b for the anode protruding to the outside of electrode case 20 and the part of feed shaft 55b for the cathode protruding to the outside of the electrode case 20.

Electrolytic part 50 is accommodated in and fixed to recess 23 while being pressed against elastic body 60 by tightening hexagon nut 34.

In the present exemplary embodiment, electrode case lid 40 is moved relative to electrode case 20 in stacking direction Z, and thus while protrusion 42 is inserted into recess 23, fitting protrusion 241 is inserted into fitting recess 411 for welding.

As described above, ozone water generator 1 according to the present exemplary embodiment is assembled only by moving each member relative to electrode case 20 in the vertical direction (stacking direction Z).

Next, an operation and action of ozone water generator 1 will be described.

First, in order to supply water to ozone water generator 1, water is supplied from inlet port 111 to channel 11. Part of water supplied to channel 11 flows into grooves 52 and is brought in contact with interface 57 and interface 58 of grooves 52.

In such a state (with electrolytic part 50 immersed in water by the supplied water), a power supply unit (not shown) applies a voltage between anode 54 and cathode 55 of electrolytic part 50. Then, a potential difference is generated between anode 54 and cathode 55 via conductive film 56. By generating the potential difference between anode 54 and cathode 55, anode 54, conductive film 56, and the cathode 55 are energized and electrolyzed mainly in the water in grooves 52 to generate ozone near interface 57 between conductive film 56 and anode 54.

Ozone generated near interface 57 between conductive film 56 and anode 54 dissolves in the water while being carried to downstream of channel 11 along the water flow. By dissolving the ozone in the water in this way, dissolved ozone water (ozone water: electrolyzed liquid) is generated.

Ozone water generator 1 is applicable to an electric device utilizing the electrolyzed liquid generated by the electrolyzed liquid generator, and a liquid modifier or the like including the electrolyzed liquid generator.

Examples of electrical equipment and liquid modifier include water treatment equipment such as a water purifier, washing machine, dishwasher, warm water washing toilet seat, refrigerator, hot and cold water supply apparatus, sterilizer, medical equipment, air conditioner, and kitchen equipment.

The present exemplary embodiment prevents scale generated by the electrolysis of water from compressing peripheral wall 22 (housing 10) and electrolytic part 50.

Specifically, space S is formed between an outer periphery of at least one of cathode 55 or anode 54 and inner surface 22a (inner surface of housing 10) of peripheral wall 22, thereby preventing the water from staying in a periphery of electrolytic part 50.

That is, purposely providing space S for flowing water between the periphery of electrolytic part 50 and peripheral wall 22 (housing 10) makes it possible to prevent the water from staying in the periphery of electrolytic part 50. Space S has a gap larger than manufacturing tolerance caused when ozone water generator 1 is assembled.

In the present exemplary embodiment, as described above, cathode 55 has a larger width in width direction Y than conductive film 56. Further, anode 54 and conductive film 56 have a substantially identical projection dimension.

With stacked body 51 formed, both ends of cathode 55 in width direction Y protrude outward from anode 54 and conductive film 56.

That is, outer periphery (side surface) 55c of cathode 55 protrudes outward from outer periphery (side surface) 54a of anode 54 in width direction Y (the direction intersecting stacking direction Z). Parts of cathode 55 protruding outward in width direction Y from outer periphery 54a of anode 54 are defined as cathode protrusions 55g (see FIG. 3).

Cathode protrusions 55g protruding outward from anode 54 and conductive film 56 are formed at both ends of cathode 55 in width direction Y in this way, and space S is formed between inner surface 22a of peripheral wall 22 and anode 54 when stacked body 51 is accommodated in recess 23. Further, space S is also formed below cathode protrusions 55g of cathode 55 (closer to anode 54 in stacking direction Z).

In the present exemplary embodiment, space S has an anode-side space (second space) S2 formed between outer periphery (side surface) 54a of anode 54 and inner surface (inner surface of housing 10) 22a of peripheral wall 22. Further, space S has lower space (third space) S3 closer to anode 54 in stacking direction Z than cathode 55.

Further, in the present exemplary embodiment, with cathode protrusions 55g formed, there is also a larger gap than the manufacturing tolerance between outer periphery (side surface) 55c of cathode 55 and inner surface (inner surface of housing 10) 22a of peripheral wall 22. That is, space S has cathode-side space (first space) S1 formed between outer periphery (side surface) 55c of cathode 55 and inner surface (inner surface of housing 10) 22a of peripheral wall 22.

As described above, in the present exemplary embodiment, space S having cathode-side space (first space) S1, anode-side space (second space) S2, and lower space (third space) S3 is formed between outer periphery (side surface) 51a of stacked body 51 and inner surface 22a of peripheral wall 22.

In the present exemplary embodiment, space S is formed around at least the longitudinal direction of stacked body 51. That is, at least a part of cathode-side space (first space) S1 is formed along side surface 51a. Side surface 51a is disposed on both sides of stacked body 51 in width direction Y and extends in the longitudinal direction (liquid flow direction X).

Cathode-side space (first space) S1 communicates with inlet port 111 and outlet port 112 to cause the water introduced into cathode-side space (first space) S1 to efficiently flow out from outlet port 112. However, cathode-side space (first space) S1 may communicate with a middle of channel 11.

Space S formed as described above can prevent the scale including calcium components and the like generated by electrolysis of water from accumulating between stacked body 51 and peripheral wall 22.

For example, a pH value is likely to rise and scale is likely to occur near interface 58 between conductive film 56 and cathode 55. However, when space S shown in the present exemplary embodiment is formed, a relatively large space is formed near interface 58. That is, interface 58 outside in width direction Y is exposed to space S while a space of a predetermined size (lower space (third space) S3) is formed closely to anode 54 in stacking direction Z (on a lower side) and a space of a predetermined size (anode-side space (second space) S2) is formed outside in width direction Y

Further, in the present exemplary embodiment, interface 58 outside in width direction Y is exposed to space S along the longitudinal direction (liquid flow direction X), and is substantially entire interface 58 outside in width direction Y is exposed to space S.

Thus, the water introduced into space S flows to downstream along liquid flow direction X. That is, the water introduced to near interface 58 exposed to space S also flows relatively quickly to downstream along liquid flow direction X. This allows the scale generated near interface 58 to flow to downstream before sticking to stacked body 51 and housing 10. Space S formed as shown in the present exemplary embodiment in this way can prevent the water from staying near interface 58 where scale is likely to occur, and can cause the scale generated near interface 58 to quickly flow to downstream. As a result, it is possible to prevent the scale from accumulating between stacked body 51 and peripheral wall 22. This can prevent the scale from pressing peripheral wall 22 (housing 10) and electrolytic part 50.

Though space S will prevent scale from accumulating between stacked body 51 and peripheral wall 22, a relatively small amount of scale sticks to stacked body 51 and peripheral wall 22. Thus, when ozone water generator 1 is used for a long period of time, the scale sticking to stacked body 51 and peripheral wall 22 can be so large to press peripheral wall part 22 (housing 10) and electrolytic part 50. Therefore, the size of space S is preferably set such that space S is not blocked by the sticking scale even after ozone water generator 1 is used for an expected life or longer by a normal method. The normal use method can be determined on the basis of, for example, quality of the water supplied into the housing (liquid quality of the liquid), an average flow speed and average flow rate of the water flowing in the housing, ozone generation efficiency (a voltage applied between the electrodes and an electrolytic area), and an expected frequency of use.

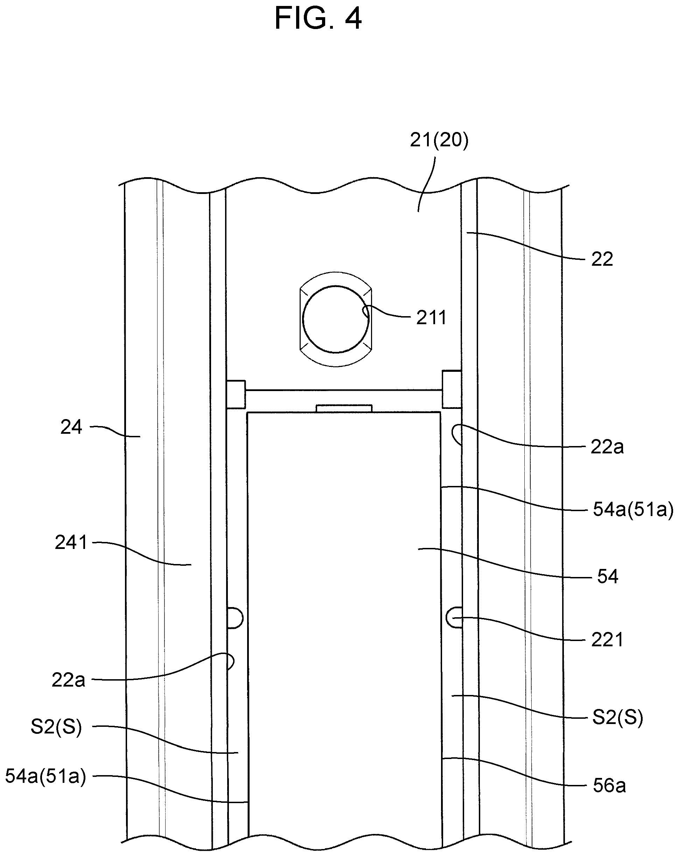

Further, a plurality of positioning protrusions 221 extending in the vertical direction (stacking direction Z) is formed inside peripheral wall 22 of electrode case 20 along the longitudinal direction (liquid flow direction X) (see FIG. 4). Then, positioning protrusions 221 suppress a displacement of anode 54 during stacking (see FIG. 4). In the present exemplary embodiment, positioning protrusions 221 are formed on the inner surface of peripheral wall 22 (an inner surface of the housing) at parts facing outer periphery 51a of stacked body 51. Positioning protrusions 221 correspond to housing protrusions that protrude toward stacked body 51.

With positioning protrusions (housing protrusions) 221 formed on peripheral wall 22, space S is formed between outer periphery (side surface) 51a of stacked body 51 and inner surface 22a of peripheral wall 22 simply by disposing stacked body 51 in recess 23.

In the present exemplary embodiment, conductive film recesses 56b as relief parts are formed in a recessed shape in outer periphery (side surface) 56a (a contour line in a plane) of conductive film 56 (see FIG. 5). Conductive film recesses 56b are formed at parts corresponding to positioning protrusions (housing protrusions) 221 when stacked body 51 is disposed in recess 23.

Thus, when conductive film 56 is inserted into recess 23 and stacked on anode 54, conductive film recesses 56b face positioning protrusions 221 on peripheral wall 22 (see FIG. 5). This can prevent conductive film 56, which has been expanded with water, from interfering with positioning protrusions 221 when ozone water is generated, for example.

Further, cathode recesses 55d as relief parts are also formed in a recessed shape in outer periphery (side surface) 55c (a contour line in a plan view) of cathode 55 having a larger width in width direction Y than conductive film 56 (see FIG. 6). Cathode recesses 55d are formed at parts corresponding to positioning protrusions (housing protrusions) 221 when stacked body 51 is disposed in recess 23.

Thus, when cathode 55 is inserted into recess 23 and stacked on conductive film 56, cathode recesses 55d face positioning protrusions 221 of peripheral wall 22 (see FIG. 6). This can prevent cathode 55 having a larger dimension in width direction Y from interfering with positioning protrusions 221. That is, cathode recesses 55d are formed so as to suppress the interference between cathode 55 and positioning protrusions 221 while increasing the surface area of cathode 55 as much as possible.

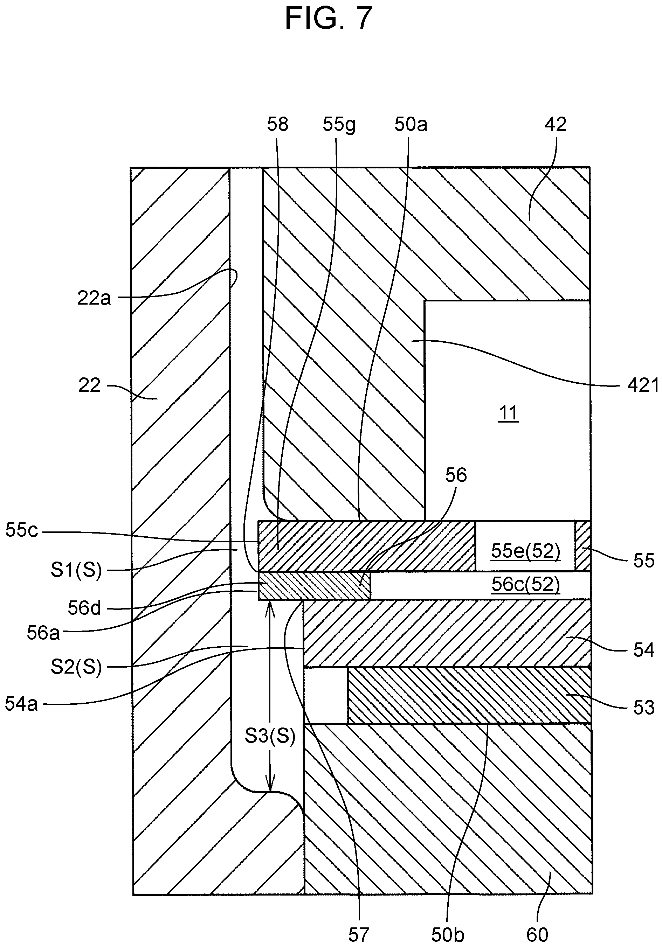

It is sufficient that space S is formed between the outer periphery of at least one of cathode 55 or anode 54 and inner surface 22a (inner surface of housing 10) of peripheral wall 22, and stacked body 51 may be configured as shown in FIGS. 7 to 11, for example.

Hereinafter, a modification of space S according to the present exemplary embodiment will be described.

First, in FIG. 7, stacked body 51 is disclosed in which outer periphery (side surface) 56a of conductive film 56 protrudes from outer periphery (side surface) 54a of anode 54 in width direction Y (the direction intersecting stacking direction Z). Parts of conductive film 56 that protrudes outward in width direction Y from outer periphery 54a of anode 54 are defined as conductive film protrusions 56d.

Further, in FIG. 7, cathode 55 and conductive film 56 have a substantially identical projection dimension.

As described above, in FIG. 7, cathode protrusions 55g protruding outward from anode 54 are formed at both ends of conductive film 56 in width direction Y, and conductive film protrusions 56d protruding outside from anode 54 are formed at both ends of cathode 55 in width direction Y Then, when stacked body 51 is accommodated in recess 23, space S having cathode-side space (first space) S1, anode-side space (second space) S2, and lower space (third space) S3 is formed between outer periphery (side surface) 51a of stacked body 51 and inner surface 22a of peripheral wall 22.

Such a configuration can also prevent scale from accumulating between stacked body 51 and peripheral wall 22.

Further, by expanding conductive film 56 to both ends in width direction Y of cathode 55, conductive film 56 is also in contact with the lower surface of cathode protrusions 55g, thereby utilizing the enlarged area of cathode 55 more efficiently. That is, the contact area (electrolytic area) between cathode 55 and conductive film 56 can be further increased.

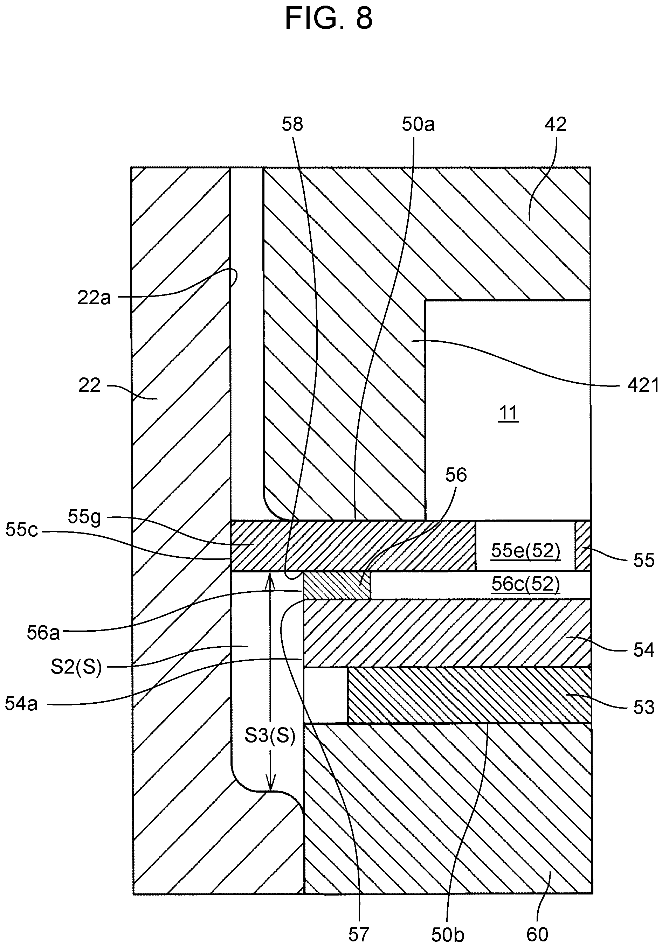

Next, similarly to stacked body 51 described in the present exemplary embodiment, FIG. 8 discloses stacked body 51 in which cathode protrusions 55g protruding outward from anode 54 and conductive film 56 are formed at both ends of cathode 55 in width direction Y

Outer periphery (a side surface extending in the longitudinal direction) 55c of cathode 55 contacts inner surface 22a of peripheral wall 22. Space S is formed between outer periphery 54a of anode 54 and inner surface 22a of peripheral wall 22, and between outer periphery 56a of conductive film 56 and inner surface 22a of peripheral wall 22. That is, when stacked body 51 is accommodated in recess 23, space S having anode-side space (second space) S2 and lower space (third space) S3 is formed between outer periphery (side surface) 51a of stacked body 51 and inner surface 22a of peripheral wall 22.

Such a configuration can also prevent scale from accumulating between stacked body 51 and peripheral wall 22.

In the configuration shown in FIG. 8 (a configuration in which outer periphery 55c of cathode 55 is in contact with inner surface 22a of peripheral wall 22), conductive film protrusions 56d described in FIG. 7 can be also formed on conductive film 56. However, if conductive film protrusions 56d are also in contact with inner surface 22a of peripheral wall 22, water may stay between interface 58 and inner surface 22a of peripheral wall 22, where scale is likely to occur. Therefore, when conductive film protrusions 56d are formed, a gap (space S) is preferably formed between outer periphery 56a of conductive film 56 and inner surface 22a of peripheral wall 22 so as to prevent water from staying.

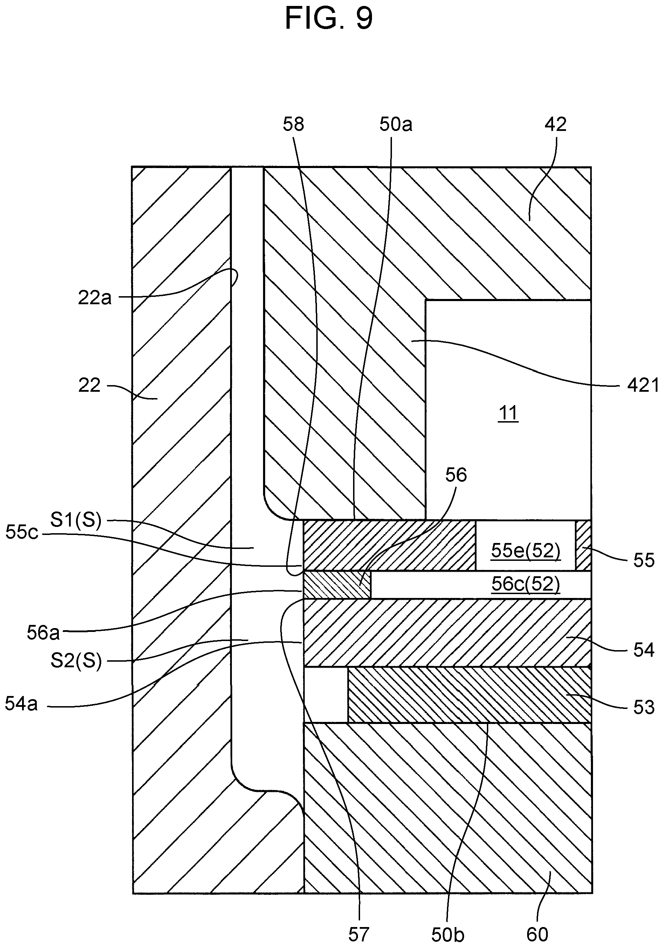

Next, FIG. 9 discloses stacked body 51 in which at least the parts extending in the longitudinal direction of outer periphery 54a of anode 54, outer periphery 55c of cathode 55, and outer periphery 56a of conductive film 56 are substantially flush with each other. Then, space S is formed between side surface 54a extending in the longitudinal direction of anode 54 and inner surface 22a of peripheral wall 22, between side surface 55c extending in the longitudinal direction of cathode 55 and inner surface 22a of peripheral wall 22, and between side surface 56a extending in the longitudinal direction of conductive film 56 and inner surface 22a of peripheral wall 22. That is, when stacked body 51 is accommodated in recess 23, space S having cathode-side space (first space) S1 and anode-side space (second space) S2 is formed between outer periphery (side surface) 51a of stacked body 51 and inner surface 22a of peripheral wall 22.

Such a configuration can also prevent scale from accumulating between stacked body 51 and peripheral wall 22.

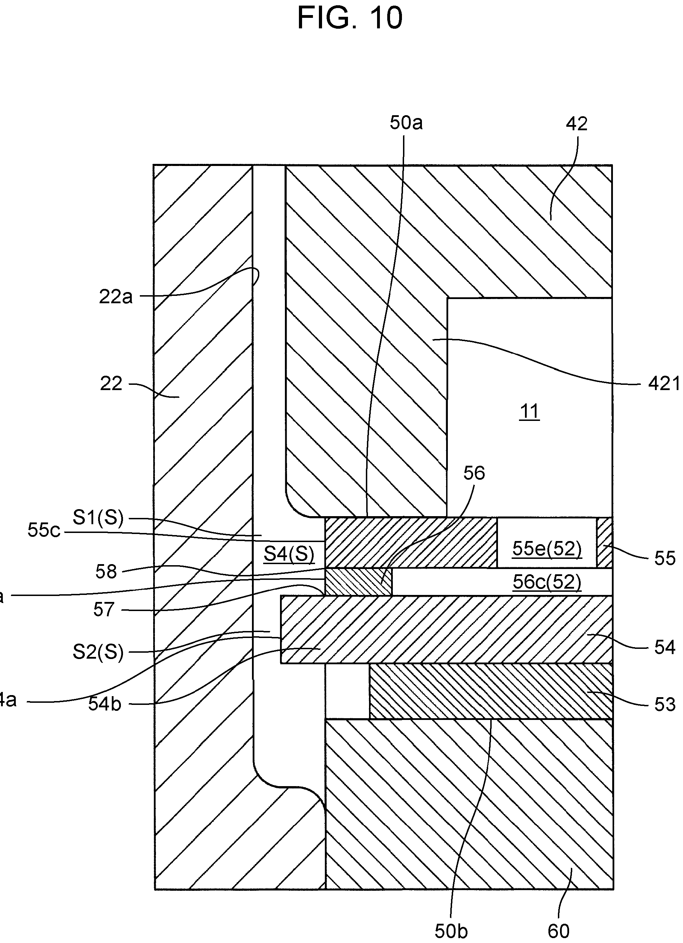

Next, FIG. 10 discloses stacked body 51 in which anode 54 is increased in size in width direction Y as compared with conductive film 56, and cathode 55 and conductive film 56 have a substantially identical projection dimension.

Then, when stacked body 51 is formed, both ends of anode 54 in width direction Y protrude outward from cathode 55 and conductive film 56, and parts of anode 54 protruding outward in width direction Y from outer periphery 55c of cathode 55 are defined as anode protrusions 54b.

Anode protrusions 54b protruding outward from cathode 55 and conductive film 56 are formed at both ends of anode 54 in width direction Y in this way, and space S is formed between inner surface 22a of peripheral wall 22 and cathode 55 when stacked body 51 is accommodated in recess 23. Further, space S is also formed above anode protrusions 54b of anode 54 (closer to cathode 55 in stacking direction Z).

As described above, in FIG. 10, space S has cathode-side space (first space) S1 formed between outer periphery (side surface) 55c of cathode 55 and inner surface 22a of peripheral wall 22 (inner surface of housing 10). Further, space S also has upper space (fourth space) S4 closer to cathode 55 in stacking direction Z than anode 54 is.

Further, in FIG. 10, with the anode protrusions 54b formed, there is also a gap exceeding the manufacturing tolerance between outer periphery (side surface) 54a of anode 54 and inner surface 22a of peripheral wall 22 (inner surface of housing 10). That is, space S has anode-side space (second space) S2 formed between outer periphery (side surface) 54a of anode 54 and inner surface 22a of peripheral wall 22 (inner surface of housing 10).

As described above, in FIG. 10, space S having cathode-side space (first space) S1, anode-side space (second space) S2, and upper space (fourth space) S4 is formed between outer periphery (side surface) 51a of stacked body 51 and inner surface 22a of peripheral wall 22.

Such a configuration can also prevent scale from accumulating between stacked body 51 and peripheral wall 22.

In the configuration shown in FIG. 10, conductive film protrusions 56d described in FIG. 7 can be formed on conductive film 56. That is, as described above, in FIG. 7, anode protrusions 54b protruding outward from cathode 55 can be formed at both ends of conductive film 56 in width direction Y, and conductive film protrusions 56d protruding outside from cathode 55 can be formed at both ends of anode 54 in width direction Y

Such a configuration can also prevent scale from accumulating between stacked body 51 and peripheral wall 22.

Further, by expanding conductive film 56 to both ends in width direction Y of anode 54, conductive film 56 is also in contact with an upper surface of anode protrusions 54b, thereby utilizing an enlarged area of anode 54 more efficiently. That is, the contact area (electrolytic area) between anode 54 and conductive film 56 can be further increased.

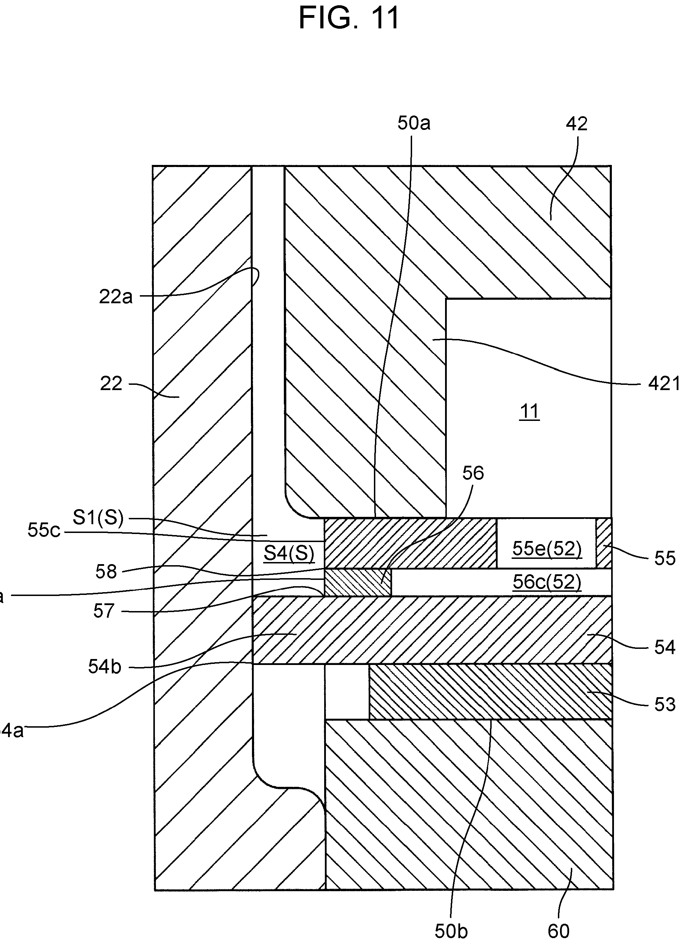

Next, similarly to stacked body 51 described in FIG. 10, FIG. 11 discloses stacked body 51 in which cathode protrusions 54b protruding outward from cathode 55 and conductive film 56 are formed at both ends of anode 54 in width direction Y

Then, outer periphery (side surface extending in the longitudinal direction) 54a of anode 54 is in contact with inner surface 22a of peripheral wall 22. Space S is formed between outer periphery 55c of cathode 55 and inner surface 22a of peripheral wall 22, and between outer periphery 56a of conductive film 56 and inner surface 22a of peripheral wall 22. That is, when stacked body 51 is accommodated in recess 23, space S having cathode-side space (first space) S1 and upper space (fourth space) S4 is formed between outer periphery (side surface) 51a of stacked body 51 and inner surface 22a of peripheral wall 22.

Such a configuration can also prevent scale from accumulating between stacked body 51 and peripheral wall 22.

In the configuration shown in FIG. 11 (a configuration in which outer periphery 54a of anode 54 is in contact with inner surface 22a of peripheral wall 22), conductive film protrusions 56d described in FIG. 7 can be also formed on conductive film 56. However, if conductive film protrusions 56d are also in contact with inner surface 22a of peripheral wall 22, water may stay between interface 58 and inner surface 22a of peripheral wall 22, where scale is likely to occur. Therefore, when conductive film protrusions 56d are formed, a gap (space S) is preferably formed between outer periphery 56a of conductive film 56 and inner surface 22a of peripheral wall 22 so as to prevent water from staying.

As described above, ozone water generator (electrolyzed liquid generator) 1 according to the present exemplary embodiment has stacked body 51 such that conductive film 56 is interposed between anode 54 and cathode 55 (between the electrodes adjacent to each other), and includes electrolytic part 50 electrolyzing water (liquid). Further, ozone water generator 1 includes housing 10 in which electrolytic part 50 is disposed.

Housing 10 includes channel 11 having inlet port 111 into which the water supplied to electrolytic part 50 flows and outlet port 112 from which the ozone water (electrolyzed water: electrolyzed liquid) generated by electrolytic part 50 flows out, and having liquid flow direction X in a direction intersecting stacking direction Z of stacked body 51.

In electrolytic part 50, grooves 52 are formed. Grooves 52 are open to channel 11, and interface 57 between conductive film 56 and electrode (anode 54) and interface 58 between conductive film 56 and the electrode (cathode 55) are at least partially exposed.

In the present exemplary embodiment, the electrodes adjacent to each other are cathode 55 and anode 54, and space S preventing the water from staying is formed between the outer periphery of at least one of cathode 55 and anode 54, and inner surface (inner surface of housing) 22a of peripheral wall 22.

Further, space S may have cathode-side space (first space) S1 formed between outer periphery 55c of cathode 55 and inner surface (inner surface of housing) 22a of peripheral wall 22.

Further, space S may have anode-side space (second space) S2 formed between outer periphery 54a of anode 54 and inner surface (inner surface of housing) 22a of peripheral wall 22.

Further, space S may have lower space (third space) S3 closer to anode 54 in stacking direction Z than cathode 55.

Space S described above, formed around electrolytic part 50, makes it possible to prevent the water from staying around electrolytic part 50. The water is prevented from staying around electrolytic part 50, and then the scale is prevented from sticking around electrolytic part 50 and to peripheral wall 22 (housing 10).

Further, even if the scale sticks around electrolytic part 50 and to peripheral wall 22, space S formed between electrolytic part 50 and peripheral wall 22 prevents the scale from pressing electrolytic part 50 and peripheral wall 22 and suppresses deformation (deflection or the like) of electrolytic part 50. By suppressing the deformation of electrolytic part 50, a contact between anode 54 and conductive film 56 and a contact between conductive film 56 and cathode 55 are suppressed from being nonuniform. That is, anode 54 and conductive film 56 can be in contact with each other more uniformly, and conductive film 56 and cathode 55 can be in contact with each other more uniformly.

Space S, formed between electrolytic part 50 and peripheral wall 22 in this way, suppresses the deformation of electrolytic part 50 due to the scale sticking, and allows stacked body 51 in electrolytic part 50 to be in contact more uniformly. Then, more uniform contact of stacked body 51 makes it possible to more stably secure an energized area (for example, an electrolytic area between conductive film 56 and cathode 55). Then, the energized area, secured more stably, can make a current density of a current flowing through electrolytic part 50 more uniform, and can further stabilize the ozone (electrolytic product) generation efficiency.

As described above, the present exemplary embodiment makes it possible to obtain ozone water generator 1 capable of suppressing the pressure on peripheral wall 22 (housing 10) and electrolytic part 50 by the scale.

Further, outer periphery 55c of cathode 55 may protrude in width direction Y (the direction intersecting stacking direction Z) from outer periphery 54a of anode 54.

This increases the area of cathode 55 by an amount of protrusion in width direction Y from outer periphery 54a of the anode 54. Thus, the current density of the current flowing through cathode 55 decreases, thereby preventing the scale generated around cathode 55 by electrolysis from accumulating.

Further, outer periphery 56a of conductive film 56 may protrude from outer periphery 54a of anode 54 in width direction Y (the direction intersecting stacking direction Z).

This can also suppress the pressure of the scale on electrolytic part 50 and peripheral wall 22, and further stabilize the ozone (electrolytic product) generation efficiency.

Further, by increasing the size of cathode 55 and conductive film 56 in width direction Y as compared with anode 54, conductive film 56 is also in contact with a lower surface of both ends of cathode 55 in width direction Y, thereby utilizing the increased area of cathode 55 more efficiently. That is, the contact area (electrolytic area) between cathode 55 and conductive film 56 can be further increased.

Further, space S may be formed around at least the longitudinal direction of stacked body 51.

This can more reliably prevent the water from staying around electrolytic part 50, and further stabilize the ozone (electrolytic product) generation efficiency.

Further, positioning protrusions (housing protrusions) 221 protruding toward stacked body 51 may be formed on inner surface 22a of peripheral wall 22 (inner surface of the housing) at parts facing outer periphery 51a of stacked body 51.

By doing so, space S can be formed between outer periphery (side surface) 51a of stacked body 51 and inner surface 22a of peripheral wall 22 simply by disposing stacked body 51 in recess 23. Thus, a gap (space S) can be more reliably secured between stacked body 51 and peripheral wall 22.

Further, cathode recesses 55d may be formed at parts of outer periphery 55c of cathode 55 corresponding to positioning protrusions (housing protrusions) 221.

This can prevent cathode 55 from interfering with positioning protrusions (housing protrusions) 221 when cathode 55 is disposed in recess 23. Thus, cathode 55 having an extremely large surface area can be disposed in the recess 23.

Further, conductive film recesses 56d may be formed at parts of outer periphery 56a of conductive film 56 corresponding to positioning protrusions (housing protrusions) 221.

This makes it possible to prevent conductive film 56, expanded with water during the generation of the ozone water from interfering with positioning protrusions (housing protrusions) 221. That is, expanded conductive film 56 can be prevented from interfering with positioning protrusions (housing protrusions) 221 and being deformed. As a result, the contact of stacked body 51 can be more uniform, and the ozone (electrolytic product) generation efficiency can be further stabilized.

Although the preferred exemplary embodiment of the present disclosure has been described above, the present disclosure is not limited to the above exemplary embodiment, and various modifications can be made.

For example, in the above exemplary embodiment, the ozone water generator that generates ozone water by generating ozone and dissolving the ozone in water has been exemplified. However, a substance to be generated is not limited to ozone. For example, hypochlorous acid may be generated and used for sterilization, water treatment, and the like. Further, it is also possible to use an apparatus generating oxygen water, hydrogen water, chlorine-containing water, hydrogen peroxide solution, or the like.

Note that these electrolyzed liquid generators can also be used while incorporated in other equipment and facilities. When incorporated into other equipment and facilities, the electrolyzed liquid generator is preferably arranged upright such that the inlet port is at the bottom and the outlet port is at the top as in ozone water generator 1. However, the arrangement is not limited to this, and can be disposed as appropriate.

Further, anode 54 can include a material selected from, for example, conductive silicon, conductive diamond, titanium, platinum, lead oxide, tantalum oxide, and the like. Any material may be used that is an electrode conductive and durable enough to generate electrolyzed water. Further, when anode 54 is a diamond electrode, a manufacturing method of anode 54 is not limited to a manufacturing method by film formation. It is also possible to configure a substrate using a material other than metal.

Further, it is sufficient that cathode 55 is an electrode having conductivity and durability, and may include a material selected from, for example, platinum, titanium, stainless steel, conductive silicon, and the like.

Further, in the above exemplary embodiment, peripheral wall 22 provided with positioning protrusions (housing protrusions) 221 extending in stacking direction Z has been illustrated, but the shape of the housing protrusions can be various. For example, the housing protrusions extending in the longitudinal direction (liquid flow direction X) may be provided at a part of peripheral wall 22 corresponding to outer periphery (side surface extending in the longitudinal direction) 54a of anode 54. This can more reliably secure space S between stacked body 51 and peripheral wall 22, and prevent the housing protrusions from obstructing the flow of water (liquid) in space S.

Further, specifications of the housing, electrolytic part, and other details (shape, size, layout, and the like) can be changed as appropriate.

### (Second exemplary embodiment)

Here, as a second exemplary embodiment of the present disclosure, a configuration of stacked body 51 of ozone water generator 1 of the present disclosure will be described in more detail.

Components described in the first exemplary embodiment are designated by the same reference marks, and the description thereof will not be repeated. A basic configuration of ozone water generator 1 is common to that of the first exemplary embodiment.

In the above known art, the hole formed in the cathode and the hole formed in the conductive film have an identical shape. That is, the hole in the cathode and the hole in the conductive film are formed to have the identical contour and size in a plan view. Then, the grooves are formed by stacking the cathode and the conductive film so as to overlap the contour lines of the holes.

However, in the known art, when the cathode is displaced relative to the conductive film in the direction intersecting the stacking direction, the electrolytic area (contact area) between the cathode and the conductive film changes. Thus, the current density of the current flowing through the electrolytic part changes, and the ozone generation efficiency fluctuates.

The configuration described below makes it possible to obtain an electrolyzed liquid generator capable of further stabilizing the generation efficiency of the electrolytic product.

In the following example, it is assumed that anode 54 and conductive film 56 have a substantially identical projection dimension.

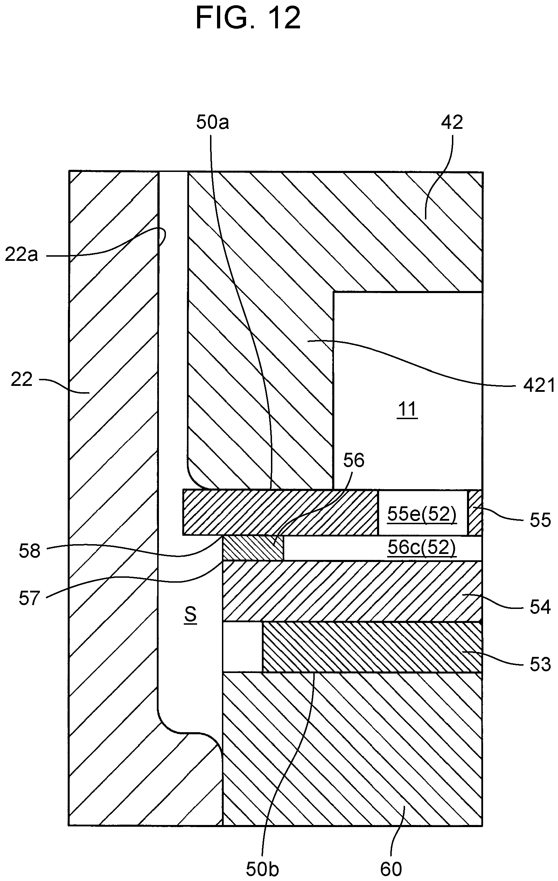

Then, during the formation of stacked body 51, both ends of cathode 55 in the width direction protrude outward from anode 54 and conductive film 56 (a configuration as shown in FIG. 12).

That is, with both ends of cathode 55 in the width direction protruding outward from anode 54 and conductive film 56, space S is formed at least between inner surface 22a of peripheral wall 22 and anode 54 when stacked body 51 is accommodated in recess 23. This space S is a space formed in order to prevent the water from staying between an outer edge of stacked body 51 and peripheral wall 22.

Space S formed as described above can prevent the scale including calcium components and the like generated by electrolysis of water from accumulating between stacked body 51 and peripheral wall 22.

Further, in the present exemplary embodiment, as shown in FIG. 12, space S is also formed between inner surface 22a of peripheral wall 22 and cathode 55.

Further, the configuration of stacked body 51 may be based on the above configurations shown in FIGS. 7 to 11. That is, the basic configuration of the first exemplary embodiment and a detailed configuration described in the second exemplary embodiment can be combined.

In the following example, the generation efficiency of ozone 70 can be further stabilized.

Specifically, the shapes (contour and size) of conductive film holes 56c and cathode holes 55e are different from each other in a plan view (as viewed along the stacking direction of stacked body 51).

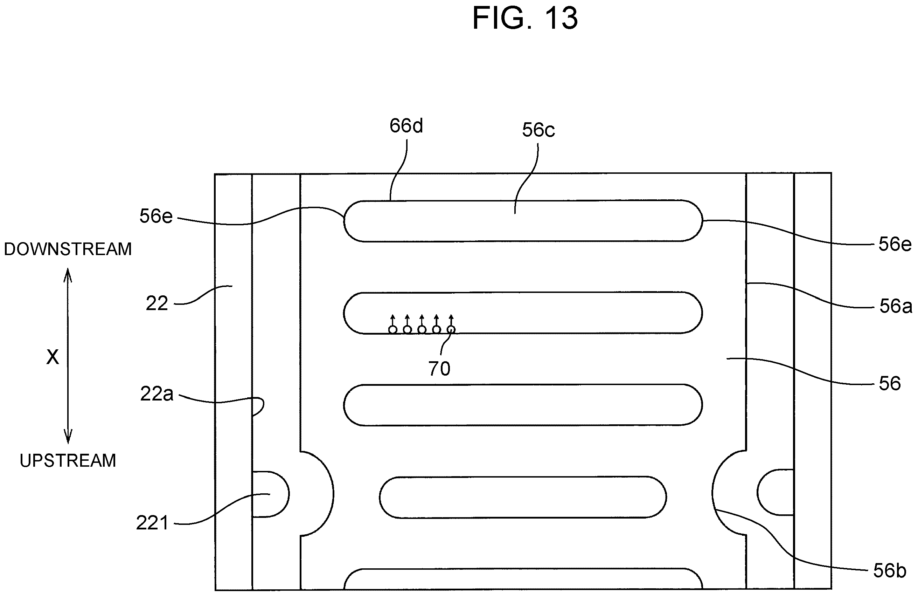

Each conductive film hole 56c is formed into an elongated hole-like shape elongated in width direction Y, and each cathode hole 55e is formed in a V-shape in which bent part 55f is disposed downstream in a plan view. As a result, the contours of conductive film holes 56c and cathode holes 55e in a plan view are different (see FIGS. 13 and 4).

In this way, conductive film holes 56c, elongated in width direction Y, extend in a direction orthogonal to liquid flow direction X (width direction Y) in a plan view (see FIG. 13). That is, an angle formed by an extending direction of conductive film holes 56c and liquid flow direction X in a plan view is 90 degrees.

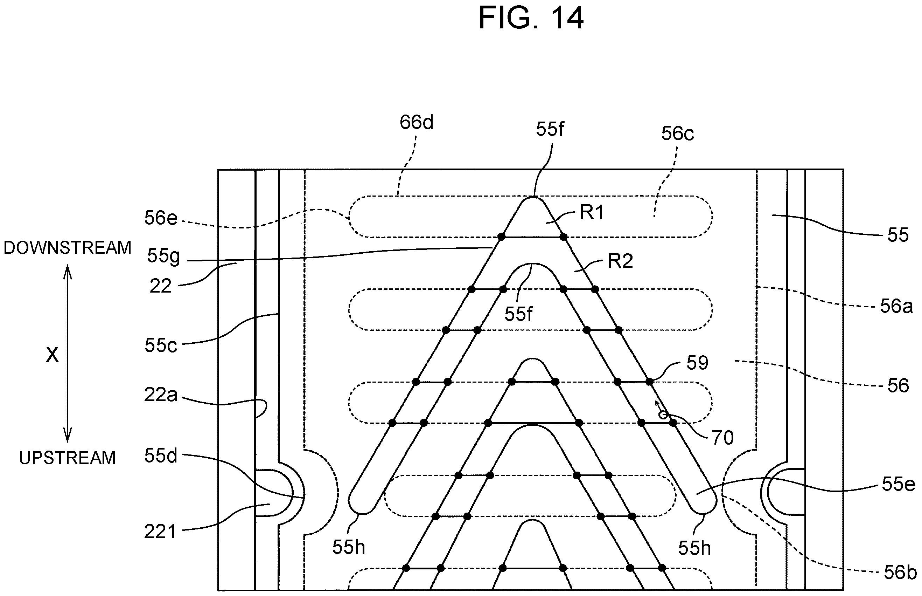

Meanwhile, each cathode hole 55e has a shape in which two elongated holes extending from upstream and outside of width direction Y toward bent part 55f located downstream and at a center of width direction Y are communicated with each other by bent part 55f. That is, the two elongated holes extending from bent part 55f toward tip 55h upstream extend in a direction intersecting liquid flow direction X in a plan view (see FIG. 14).

Each cathode hole 55e is formed such that tip 55h is located outside in the width direction upstream of bent part 55f. Therefore, the two elongated holes configuring each cathode hole 55e extend in the direction intersecting liquid flow direction X and intersecting width direction Y (the direction orthogonal to liquid flow direction X). That is, an absolute value of each acute angle formed between the extending directions of the two elongated holes configuring cathode holes 55e and liquid flow direction X is larger than 0 degrees and smaller than 90 degrees.

Thus, for example, each cathode hole 55e can be a V-shaped groove in which the extending direction of a first elongated hole is a direction inclined by 30 degrees with respect to liquid flow direction X, and the extending direction of a second elongated hole is a direction inclined by -30 degrees with respect to liquid flow direction X.

The absolute value of the acute angle formed by the extending direction of the first elongated hole and the liquid flow direction X does not have to be set to the same value as the absolute value of the acute angle formed by the extending direction of the second elongated hole and liquid flow direction X. That is, the shape of cathode holes 55e in a plan view does not have to be line-symmetric with respect to a straight line passing through bent part 55f and extending in liquid flow direction X.

In the present exemplary embodiment, with cathode 55 stacked on conductive film 56, the extending directions of the two elongated holes configuring each cathode hole 55e are non-parallel to the extending direction of conductive film holes 56c in a plan view.

Then, with cathode 55 stacked on conductive film 56, conductive film holes 56c and cathode holes 55e are configured to partially communicate with each other. That is, parts of a plurality of the elongated holes extending in different directions communicate with each other.

With such a configuration, conductive film 56 and cathode 55 are stacked to have intersections 59 (see FIG. 14) in which outer periphery (contour line in a plan view) 66d of each conductive film hole 56c and outer periphery (contour line in a plan view) 55g of each cathode hole 55e intersect each other in a plan view.

Further, the plurality of conductive film holes 56c is formed in conductive film 56 so as to be aligned in a row along liquid flow direction X. The plurality of cathode holes 55e is formed in cathode 55 so as to be aligned in a row along liquid flow direction X.

In two cathode holes 55e adjacent to each other in liquid flow direction X are disposed such that bent part 55f of cathode hole 55e disposed upstream is located downstream of tip 55h of cathode hole 55e disposed downstream. A plurality of conductive film holes 56c is disposed so as to intersect one cathode hole 55e with cathode 55 stacked on conductive film 56.

Therefore, in a plan view with cathode 55 stacked on conductive film 56, a plurality of communication regions R1 communicating with conductive film holes 56c and a plurality of exposed regions R2 exposing conductive film 56 are formed in one cathode hole 55e. That is, a plurality of intersections 59 is formed in one cathode hole 55e.

At this time, it is preferable that the shape of the plurality of conductive film holes 56c is identical, the shape of the plurality of cathode holes 55e is identical, and the pitch of conductive film holes 56c in liquid flow direction X and the pitch of cathode holes 55e in liquid flow direction X are identical.

Then, communication regions R1 and exposed regions R2 appear regularly along liquid flow direction X.

Further, in this example, cathode 55 has a larger width in width direction Y than conductive film 56. Thus, the contact area (electrolytic area) between cathode 55 and conductive film 56 can be approximated to a value obtained by subtracting a total area of exposed regions R2 from the area of an upper surface of conductive film 56 (a top part of conductive film 56 where conductive film holes 56c are not formed).

Cathode 55 and conductive film 56 configured as described above can decrease a change amount of the contact area (electrolytic area) between cathode 55 and conductive film 56 even if conductive film 56 is displaced relative to cathode 55 during formation of stacked body 51. That is, when the positions are displaced by an identical amount, the change amount of the electrolytic area can be smaller in the configuration shown in the present exemplary embodiment than in the configuration shown in the above known art.

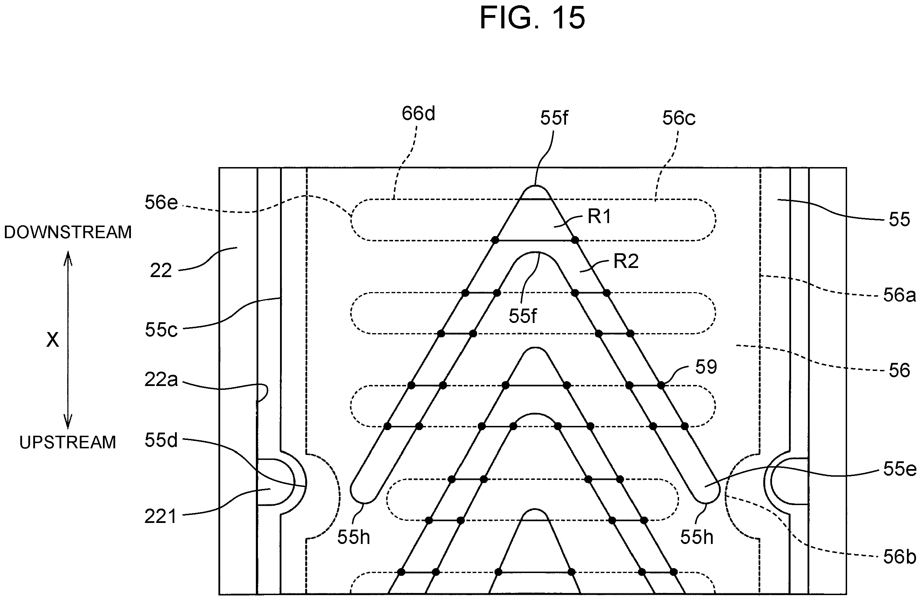

For example, as shown in FIG. 15, when conductive film 56 is displaced relative to cathode 55 in liquid flow direction X during the formation of stacked body 51, an area of one exposed region R2 (and an area of one communication region R1) slightly changes near bent part 55f of each cathode hole 55e. However, the area of one exposed region R2 hardly changes in the other parts. Therefore, the change amount in the total area of exposed regions R2 in one cathode hole 55e is substantially identical to the change amount near bent part 55f.

Further, in this example, even if conductive film 56 is displaced relative to cathode 55 in liquid flow direction X, outer periphery 56a of conductive film 56 (contour line in plan view) is in contact with cathode 55 as long as an amount of the displacement is within a certain extent. Thus, the contact area between conductive film 56 and cathode 55 is prevented from changing by outer periphery (contour line in a plan view) 56a of conductive film 56 protruding from cathode 55.

In such a configuration, the contact area between conductive film 56 and cathode 55 after the displacement in liquid flow direction X only slightly changes from the contact area between conductive film 56 and cathode 55 when conductive film 56 is stacked at a regular position.

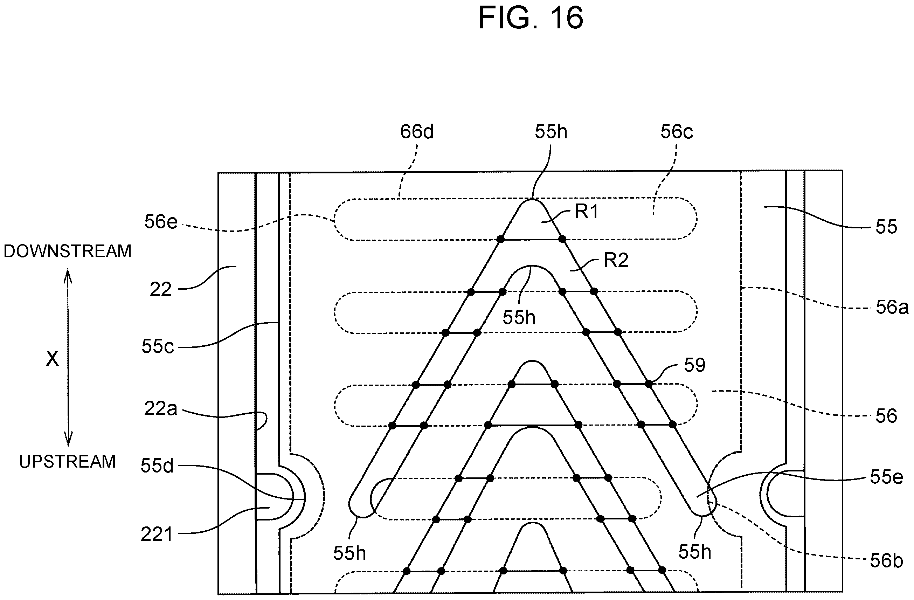

Further, as shown in FIG. 16, when conductive film 56 is displaced relative to cathode 55 in width direction Y during the formation of stacked body 51, the area of one exposed region R2 (and the area of one communication region R1) basically remains almost unchanged. However, a length of conductive film holes 56c in width direction Y is slightly shorter in the part where conductive film recesses 56b are formed as relief parts. In this part, the area of one exposed region R2 slightly changes.

In this way, when the position is relatively displaced in width direction Y, the change amount of the total area of exposed regions R2 in one cathode hole 55e is substantially identical to the change amount at the part where conductive film recesses 56b as relief parts are formed.

As shown in FIG. 16, even if conductive film 56 is displaced relative to cathode 55 in width direction Y, outer periphery 56a of conductive film 56 (contour line in plan view) is in contact with cathode 55 as long as an amount of the displacement is within a certain extent. Therefore, in such a configuration, the contact area between conductive film 56 and cathode 55 after the displacement in width direction Y only slightly changes from the contact area between conductive film 56 and cathode 55 when conductive film 56 is stacked at a regular position.

In such a configuration, even if conductive film 56 is displaced relative to cathode 55 in a horizontal direction (liquid flow direction X and width direction Y), the contact area between conductive film 56 and cathode 55 only slightly changes.

In contrast, as shown in the above known art, when grooves are formed by overlapping holes having the identical shape, exposed regions R2 which are not formed in a regular state are formed in each groove by conductive film 56 displaced with respect to cathode 55.

Thus, the total area of exposed regions R2 formed in each groove is the change amount of the contact area between conductive film 56 and cathode 55. When conductive film 56 is displaced by the identical amount with respect to the cathode 55, exposed regions R2 newly formed in each groove have a larger value than the change amount of the contact area between conductive film 56 and cathode 55 in the configuration shown in the present exemplary embodiment.

For example, when conductive film 56 is displaced with respect to cathode 55 by the identical amount in liquid flow direction X, exposed regions R2 only change near bent part 55f in the configuration shown in the present exemplary embodiment. However, in the configuration shown by the known art, exposed regions R2 protruding by the amount of displacement in liquid flow direction X are formed substantially entirely in width direction Y of grooves 52. In this way, when conductive film 56 is displaced by the identical amount with respect to cathode 55, the change amount of the contact area between conductive film 56 and cathode 55 is smaller in the configuration shown in the present exemplary embodiment than in the configuration shown by the known art.

Furthermore, in the present exemplary embodiment, arcuate curved parts 56e in a plan view are formed at both ends of each conductive film hole 56c in width direction Y. This prevents a formation of an edge on outer periphery (contour line in a plan view) 66d of each conductive film hole 56c.

Further, arcuate curved parts in a plan view are formed at bent part 55f and tip 55h of each cathode hole 55e. This prevents a formation of an edge on outer periphery (contour line in a plan view) 55g of cathode hole 55e.

As described above, outer periphery (contour line in a plan view) 66d of each conductive film hole 56c and outer periphery (contour line in the plan view) 55g of each cathode hole 55e, which are smooth, can alleviate a local concentration of an electric field during the electrolysis. As a result, ozone 70 (see FIG. 13) can be generated more uniformly over the entire part of interface 57 exposed to grooves 52, and the generation efficiency of ozone 70 can be more stabilized.

In the present exemplary embodiment, grooves 52 include conductive film holes (conductive film grooves) 56c formed in conductive film 56 and cathode holes (electrode grooves) 55e formed in cathode (electrode) 55 and communicating with conductive film holes 56c.

Then, the shape of conductive film holes 56c and the shape of cathode holes 55e are different when viewed along stacking direction Z of stacked body 51.

Then, even if conductive film 56 is displaced relative to cathode (electrode) 55 in the direction intersecting stacking direction Z, the contact area between conductive film 56 and cathode (electrode) 55 can be prevented from changing. That is, the electrolytic area (energized area) between conductive film 56 and cathode (electrode) 55 can be secured more stably.

In this way, stably securing the electrolytic area (energized area) between conductive film 56 and cathode (electrode) 55 can make the current density of the current flowing through electrolytic part 50 more uniform. That is, it is possible to suppress a change in the current density of the current flowing through electrolytic part 50 for each individual product. As a result, the generation efficiency of ozone (electrolytic product) 70 can be further stabilized.

As described above, in the present exemplary embodiment, the generation efficiency of ozone (electrolytic product) 70 can be further stabilized even when conductive film 56 and cathode (electrode) 55 are displaced. That is, ozone water generator 1 can be obtained in which the generation efficiency of ozone (electrolytic product) 70 is substantially constant.

Further, in the present exemplary embodiment, conductive film 56 and cathode 55 are stacked so as to have intersection 59 in which outer periphery 66d of conductive film holes 56c and outer periphery 55g of cathode holes 55e intersect each other as viewed along stacking direction Z of stacked body 51.

Then, when conductive film 56 and cathode (electrode) 55 are displaced, the change in the contact area between conductive film 56 and cathode (electrode) 55 can be more reliably suppressed.

Further, in the present exemplary embodiment, conductive film holes 56c extend in a direction intersecting liquid flow direction (liquid direction in which liquid flows) X.

This allows ozone 70 generated near interface 57 between conductive film 56 and anode 54 to be quickly peeled off from interface 57. That is, the bubbles of ozone 70 generated near interface 57 are prevented from becoming larger.

The bubbles of ozone 70 having grown larger may be left undissolved by the water (liquid) and float in the water (liquid) even if peeled off from interface 57, thereby reducing a dissolved concentration of ozone (electrolytic product) 70 in the water (liquid).

However, conductive film holes 56c formed so as to extend in the direction intersecting liquid flow direction X as in the present exemplary embodiment allow the bubbles of ozone 70 to be quickly peeled off from interface 57 before growing larger. As a result, dissolution of ozone (electrolytic product) 70 in water (liquid) can be further improved.

Further, in the present exemplary embodiment, conductive film holes 56c extend in the direction orthogonal to liquid flow direction X.

Then, ozone 70 generated near interface 57 between conductive film 56 and anode 54 can be more quickly peeled off from interface 57.

Further, in the present exemplary embodiment, the electrodes adjacent to each other are cathode 55 and anode 54. The electrode grooves have cathode holes (cathode grooves) 55e formed in cathode 55, and cathode holes 55e extend in the direction intersecting liquid flow direction X.

This can prevent ozone (electrolytic product) 70 from staying in grooves 52, and can cause ozone 70 to flow into channel 11 more efficiently.

Further, in the present exemplary embodiment, each cathode hole 55e has a V-shape in which bent part 55f is disposed downstream as viewed along stacking direction Z of stacked body 51.

Thus, generated ozone (electrolytic product) 70 moves along the inclination of cathode holes 55e to a center where the flow speed is relatively large, and ozone (electrolytic product) 70 can be further prevented from staying. As a result, an ozone concentration (electrolytic product concentration) can be further increased.

Further, it is preferable that the shape of the plurality of conductive film holes 56c is identical, the shape of the plurality of cathode holes 55e is identical, and the pitch of conductive film holes 56c in liquid flow direction X and the pitch of cathode holes 55e in liquid flow direction X are identical.

By doing so, communication regions R1 and exposed regions R2 appear regularly along liquid flow direction X, thereby reducing an influence of the displacement.

Further, arcuate curved parts 56e in a plan view are preferably formed at both ends of each conductive film hole 56c in width direction Y

Further, the arcuate curved parts in a plan view are preferably formed in bent part 55f and the tip of each cathode hole 55e.

This can alleviate a local concentration of an electric field during the electrolysis, and can generate ozone 70 more uniformly over the entire part of interface 57 exposed to grooves 52. As a result, the generation efficiency of ozone 70 can be further stabilized.

Further, cathode holes 55e may be formed in an elongated shape extending along liquid flow direction X such that cathode holes 55e and conductive film holes 56c intersect in a cross shape in a plan view during stacking.

Further, the extending direction of conductive film holes 56c may be the direction intersecting liquid flow direction X and width direction Y (the direction orthogonal to liquid flow direction X). At this time, the extending direction of conductive film holes 56c and the extending direction of cathode holes 55e are preferably non-parallel, and conductive film holes 56c and cathode holes 55e preferably intersect during stacking.

Further, conductive film holes 56c and cathode holes 55e may have similar shapes, and entire small holes may be in large holes during the stacking.

Further, conductive film holes 56c may be V-shaped, and cathode holes 55e may be elongated.

The electrode case, the electrode case lid, and other detailed specifications (shape, size, layout, and the like) can be changed as appropriate.

As described above, the present disclosure can take the following aspects.

An electrolyzed liquid generator of the present disclosure has a stacked body in which a conductive film is stacked to be interposed between a plurality of electrodes adjacent to each other, and a housing in which an electrolytic part is disposed, the electrolytic part being configured to electrolyze a liquid.

The housing includes a channel having an inlet port into which a liquid supplied to the electrolytic part flows and an outlet port from which an electrolyzed liquid generated in the electrolytic part flows out, and having a liquid flow direction in a direction intersecting a stacking direction of the stacked body.

Then, the electrolytic part includes a groove opening to the channel and having an interface between the conductive film and the plurality of the electrodes, the interface being at least partially exposed.

The groove includes a conductive film groove disposed on the conductive film and an electrode groove disposed on the plurality of electrodes and communicating with the conductive film groove.

The shape of the conductive film groove and the shape of the electrode groove are different when viewed along the stacking direction of the stacked body.

Further, the conductive film and the plurality of electrodes may be stacked so as to have an intersection in which an outer periphery of the conductive film groove and an outer periphery of the electrode groove intersect each other when viewed along the stacking direction of the stacked body.

Further, the conductive film groove may extend in the direction intersecting the liquid flow direction.

Further, the conductive film groove may extend in a direction orthogonal to the liquid flow direction.

Further, the plurality of electrodes adjacent to each other is a cathode and an anode, the electrode groove has a cathode groove formed on the cathode, and the cathode groove may extend in a direction intersecting the liquid flow direction.

The cathode groove may have a V-shape in which a bent part is disposed downstream when viewed along the stacking direction of the stacked body.

Although the preferred exemplary embodiment of the present disclosure has been described above, the present disclosure is not limited to the above exemplary embodiment, and various modifications can be made.

For example, in the above exemplary embodiment, the ozone water generator that generates ozone by generating ozone and dissolving the ozone in water has been exemplified. However, a substance to be generated is not limited to ozone. For example, hypochlorous acid may be produced and used for sterilization, water treatment, and the like. Further, it is also possible to use an apparatus generating oxygen water, hydrogen water, chlorine-containing water, hydrogen peroxide solution, or the like.

Note that these electrolyzed liquid generators can also be used while incorporated in other equipment and facilities. When incorporated into other equipment and facilities, the electrolyzed liquid generator is preferably arranged upright such that the inlet port is at the bottom and the outlet port is at the top as in ozone water generator 1. However, the arrangement is not limited to this, and an appropriate arrangement is possible.

Anode 54 can also include a material selected from, for example, conductive silicon, conductive diamond, titanium, platinum, lead oxide, tantalum oxide, and the like. Any material may be used as long as an electrode having conductivity and durability capable of producing electrolyzed water can be configured. Further, when anode 54 is a diamond electrode, a manufacturing method of anode 54 is not limited to a manufacturing method by film formation. It is also possible to configure a substrate using a material other than metal.

Further, it is sufficient that cathode 55 is an electrode having conductivity and durability, and may include a material selected from, for example, platinum, titanium, stainless steel, conductive silicon, and the like.

Further, cathode holes 55e may be formed in an elongated shape extending along liquid flow direction X such that cathode holes 55e and conductive film holes 56c intersect in a cross shape in a plan view during stacking.

Further, the extending direction of conductive film holes 56c may be the direction intersecting liquid flow direction X and width direction Y (the direction orthogonal to liquid flow direction X). At this time, the extending direction of conductive film holes 56c and the extending direction of cathode holes 55e are preferably non-parallel, and conductive film holes 56c and cathode holes 55e preferably intersect during stacking.

Further, conductive film holes 56c and cathode holes 55e may have similar shapes, and entire small holes may be in large holes during the stacking.

Conductive film holes 56c may be V-shaped, and cathode holes 55e may be elongated.

The electrode case, the electrode case lid, and other detailed specifications (shape, size, layout, and the like) can be changed as appropriate.

### INDUSTRIAL APPLICABILITY

As described above, the present disclosure can achieve a special effect that the pressure on the housing and the electrolytic part by the scale can be suppressed. The present disclosure is applicable to an electric device utilizing the electrolyzed liquid generated by the electrolyzed liquid generator, and a liquid modifier or the like including the electrolyzed liquid generator, and therefore is useful.

### REFERENCE MARKS IN THE DRAWINGS

1: ozone water generator (electrolyzed liquid generator)
10: housing
11: channel
111: inlet port
112: outlet port
20: electrode case
21: bottom wall
21a: inner surface
211: through-hole
22: peripheral wall
22a: inner surface
221: positioning protrusion (housing protrusion)
23: recess
24: flange
241: fitting protrusion
31: O-ring
32: first washer
33: second washer
34: hexagon nut
40: electrode case lid
41: lid body
411: fitting recess
412: groove
42: protrusion
421: protruding part
50: electrolytic part
50a: upper surface
50b: lower surface
51: stacked body
51a: outer periphery (side surface)
52: groove
53: feeder
53a: spring
53b: feed shaft
54: anode (electrode)
54a: outer periphery (side surface)
54b: anode protrusion
55: cathode (electrode)
55a: spring
55b: feed shaft
55c: outer periphery (side surface)
55d: cathode recess
55e: cathode hole
55f: bent part
55g: cathode protrusion
55h: tip
56: conductive film
56a: outer periphery (side surface)
56b: conductive film recess
56c: conductive film hole
56d: conductive film protrusion
56e: curved part
57: interface (interface between conductive film and anode)
58: interface (interface between conductive film and cathode)
59: intersection
60: elastic body
61: through-hole
66d: outer periphery
70: ozone
S: space
S1: cathode-side space (first space)
S2: anode-side space (second space)
S3: lower space (third space)
S4: upper space (fourth space)
X: liquid flow direction (liquid direction in which liquid flows)
Y: width direction
Z: stacking direction

## Claims

1. An electrolyzed liquid generator (1), comprising:
an electrolytic part (50) having a stacked body (51) in which a conductive film (56) is stacked to be interposed between a cathode (55) and an anode (54), the electrolytic part (50) being configured to electrolyze a liquid; and
a housing (10) in which the electrolytic part (50) is disposed, wherein
the housing (10) includes a channel (11) having an inlet port (111) into which a liquid supplied to the electrolytic part (50) flows and an outlet port (112) from which an electrolyzed liquid generated in the electrolytic part (50) flows out, and having a liquid flow direction (X) in a direction intersecting a stacking direction (Z) of the stacked body (51),
the electrolytic part (50) includes a groove (52) opening to the channel (11) and having an interface (58) between the conductive film (56) and the cathode (55) and an interface (57) between the conductive film (56) and the anode (54), the interfaces (58, 57) at least partially being exposed,
**characterized in that**
the electrolyzed liquid generator (1) has a space (S) between at least one of an outer periphery (55c) of the cathode (55) and an outer periphery (54a) of the anode (54), and an inner surface (22a) of the housing (10) when viewed along the liquid flow direction (X), wherein the outer periphery (55c) of the cathode (55) is a side surface of the cathode (55) and the outer periphery (54a) of the anode (54) is a side surface of the anode (54).

2. The electrolyzed liquid generator (1) according to claim 1, wherein the space (S) has a first space (S1) between the outer periphery (55c) of the cathode (55) and the inner surface (22a) of the housing (10).

3. The electrolyzed liquid generator (1) according to claim 1 or 2, wherein the space (S) has a second space (S2) between the outer periphery (54a) of the anode (54) and the inner surface (22a) of the housing (10).

4. The electrolyzed liquid generator (1) according to any one of claims 1 to 3, wherein the outer periphery (55c) of the cathode (55) protrudes from the outer periphery (54a) of the anode (54) in the direction intersecting the stacking direction (Z).

5. The electrolyzed liquid generator (1) according to claim 4, wherein the space (S) has a third space (S3) closer to the anode (54) in the stacking direction (Z) than the cathode (55).

6. The electrolyzed liquid generator (1) according to claim 4 or 5, wherein the outer periphery (56a) of the conductive film (56) protrudes from the outer periphery (54a) of the anode (54) in the direction intersecting the stacking direction (Z).

7. The electrolyzed liquid generator (1) according to any one of claims 1 to 6, wherein the space (S) is disposed at least around a longitudinal direction (X) of the stacked body (51).

8. The electrolyzed liquid generator (1) according to any one of claims 1 to 7, wherein the housing (10) has a housing protrusion (221) protruding toward the stacked body (51) on the inner surface (22a) of the housing (10) at a part facing an outer periphery (51a) of the stacked body (51).

9. The electrolyzed liquid generator (1) according to claim 8, wherein the cathode (55) has a cathode recess (55d) at a part of the outer periphery (55c) of the cathode (55), the part corresponding to the housing protrusion (221).

10. The electrolyzed liquid generator (1) according to claim 8 or 9, wherein the conductive film (56) has a conductive film recess (56b) at a part of the conductive film (56), the part corresponding to the housing protrusion (221).

11. The electrolyzed liquid generator (1) according to any one of claims 1 to 10, wherein
the groove (52) includes a conductive film groove (56c) disposed on the conductive film (56) and an electrode groove (55e) disposed on at least one of the cathode (55) or the anode (54) and communicating with the conductive film groove (56c), and
the conductive film groove (56c) and the electrode groove (55e) have different shapes when viewed along the stacking direction (Z) of the stacked body (51).

12. The electrolyzed liquid generator (1) according to claim 11, wherein the conductive film (56) and at least one of the cathode (55) and the anode (54) are stacked to have an intersection (59) in which an outer periphery (66d) of the conductive film groove (56c) and an outer periphery (55g) of the electrode groove (55e) intersect each other when viewed along the stacking direction (Z) of the stacked body (51).

13. The electrolyzed liquid generator (1) according to claim 11 or 12, wherein the conductive film groove (56c) extends in a direction intersecting the liquid flow direction (X).

14. The electrolyzed liquid generator (1) according to claim 13, wherein the conductive film groove (56c) extends in a direction orthogonal to the liquid flow direction (X).

15. The electrolyzed liquid generator (1) according to any one of claims 11 to 14, wherein the electrode groove has a cathode groove (55e) disposed on the cathode (55), the cathode groove (55e) extending in the direction intersecting the liquid flow direction (X).

16. The electrolyzed liquid generator (1) according to claim 15, wherein the cathode groove (55e) has a V-shape in which a bent part (55f) is disposed downstream when viewed along the stacking direction (Z) of the stacked body (51).

## Patentansprüche

1. Vorrichtung (1) für Erzeugung elektrolysierter Flüssigkeit, die umfasst:
einen elektrolytischen Teil (50), der einen geschichteten Körper (51) aufweist, in dem ein leitender Film (56) so geschichtet ist, dass er zwischen einer Kathode (55) und einer Anode (54) angeordnet ist, wobei der elektrolytische Teil (50) so ausgeführt ist, dass er eine Flüssigkeit elektrolysiert, sowie
ein Gehäuse (10), in dem der elektrolytische Teil (50) angeordnet ist, wobei das Gehäuse (10) einen Kanal (11) mit einer Einlassöffnung (111), in die eine dem elektrolytischen Teil (50) zugeführte Flüssigkeit einströmt, sowie einer Auslassöffnung (112) enthält, über die eine in dem elektrolytischen Teil (50) erzeugte elektrolytische Flüssigkeit ausströmt, und mit einer Flüssigkeits-Strömungsrichtung (X) in einer Richtung, die eine Schichtungs-Richtung (Z) des geschichteten Körpers (51) schneidet,
der elektrolytische Teil (50) eine Nut (52) enthält, die sich zu dem Kanal (11) öffnet, und eine Grenzfläche (58) zwischen dem leitenden Film (56) und der Kathode (55) sowie eine Grenzfläche (57) zwischen dem leitenden Film (56) und der Anode (54) aufweist, wobei die Grenzflächen (58, 57) wenigstens teilweise freiliegen,
**dadurch gekennzeichnet, dass**
die Vorrichtung (1) für Erzeugung elektrolysierter Flüssigkeit, in der Flüssigkeits-Strömungsrichtung (X) gesehen, einen Raum (S) zwischen einem Außenrand (55c) der Kathode (55) oder/und einem Außenrand (54a) der Anode (54) und einer Innenfläche (22a) des Gehäuses (10) hat, wobei der Außenrand (55c) der Kathode (55) eine Seitenfläche der Kathode (55) ist und der Außenrand (54a) der Anode (54) eine Seitenfläche der Anode (54) ist.

2. Vorrichtung (1) für Erzeugung elektrolysierter Flüssigkeit nach Anspruch 1, wobei der Raum (S) einen ersten Raum (S1) zwischen dem Außenrand (55c) der Kathode (55) und der Innenfläche (22a) des Gehäuses (10) aufweist.

3. Vorrichtung (1) für Erzeugung elektrolysierter Flüssigkeit nach Anspruch 1 oder 2, wobei der Raum (S) einen zweiten Raum (S2) zwischen dem Außenrand (54a) der Anode (54) und der Innenfläche (22a) des Gehäuses (10) aufweist.

4. Vorrichtung (1) für Erzeugung elektrolysierter Flüssigkeit nach einem der Ansprüche 1 bis 3, wobei der Außenrand (55c) der Kathode (55) in der die Schichtungs-Richtung (Z) schneidenden Richtung von dem Außenrand (54a) der Anode (54) vorsteht.

5. Vorrichtung (1) für Erzeugung elektrolysierter Flüssigkeit nach Anspruch 4, wobei der Raum (S) einen dritten Raum (S3) aufweist, der in der Schichtungs-Richtung (Z) näher an der Anode (54) als an der Kathode (55) liegt.

6. Vorrichtung (1) für Erzeugung elektrolysierter Flüssigkeit nach Anspruch 4 oder 5, wobei der Außenrand (56a) des leitenden Films (56) in der die Schichtungs-Richtung (Z) schneidenden Richtung von dem Außenrand (54a) der Anode (54) vorsteht.

7. Vorrichtung (1) für Erzeugung elektrolysierter Flüssigkeit nach einem der Ansprüche 1 bis 6, wobei der Raum (S) wenigstens um eine Längsrichtung (X) des geschichteten Körpers (51) herum angeordnet ist.

8. Vorrichtung (1) für Erzeugung elektrolysierter Flüssigkeit nach einem der Ansprüche 1 bis 7, wobei das Gehäuse (10) an der Innenfläche (22a) des Gehäuses (10) einen Gehäuse-Vorsprung (221) aufweist, der an einem Teil, der einem Außenrand (51a) des geschichteten Körpers (51) zugewandt ist, in Richtung des geschichteten Körpers (51) vorsteht.

9. Vorrichtung (1) für Erzeugung elektrolysierter Flüssigkeit nach Anspruch 8, wobei die Kathode (55) eine Kathoden-Aussparung (55d) an einem Teil des Außenrandes (55c) der Kathode (55) aufweist, wobei der Teil dem Gehäuse-Vorsprung (221) entspricht.

10. Vorrichtung (1) für Erzeugung elektrolysierter Flüssigkeit nach Anspruch 8 oder 9, wobei der leitende Film (56) eine Aussparung (56b) des leitenden Films an einem Teil des leitenden Films (56) aufweist, wobei der Teil dem Gehäuse-Vorsprung (221) entspricht.

11. Vorrichtung (1) für Erzeugung elektrolysierter Flüssigkeit nach einem der Ansprüche 1 bis 10, wobei
die Nut (52) eine Nut (56c) des leitenden Films, die an dem leitenden Film (56) angeordnet ist, sowie eine Elektroden-Nut (55e) einschließt, die an der Kathode (55) oder/und der Anode (54) angeordnet ist und mit der Nut (56c) des leitenden Films in Verbindung steht, und
die Nut (56c) des leitenden Films und die Elektroden-Nut (55e), in der Schichtungs-Richtung (Z) des geschichteten Körpers (51) gesehen, unterschiedliche Formen haben.

12. Vorrichtung (1) für Erzeugung elektrolysierter Flüssigkeit nach Anspruch 11, wobei der leitende Film (56) und die Kathode (55) oder/und die Anode (54) so geschichtet sind, dass sie eine Schnittstelle (59) aufweisen, an der ein Außenrand (66d) der Nut (56c) des leitenden Films und ein Außenrand (55g) der Elektroden-Nut (55e) einander, in der Schichtungs-Richtung (Z) des geschichteten Körpers (51) gesehen, schneiden.

13. Vorrichtung (1) für Erzeugung elektrolysierter Flüssigkeit nach Anspruch 11 oder 12, wobei sich die Nut (56c) des leitenden Films in einer Richtung erstreckt, die die Flüssigkeits-Strömungsrichtung (X) schneidet.

14. Vorrichtung (1) für Erzeugung elektrolysierter Flüssigkeit nach Anspruch 13, wobei sich die Nut (56c) des leitenden Films in einer Richtung rechtwinklig zu der Flüssigkeits-Strömungsrichtung (X) erstreckt.

15. Vorrichtung (1) für Erzeugung elektrolysierter Flüssigkeit nach einem der Ansprüche 11 bis 14, wobei die Elektroden-Nut eine an der Kathode (55) angeordnete Kathoden-Nut (55e) aufweist und sich die Kathoden-Nut (55e) in der die Flüssigkeit-Strömungsrichtung (X) schneidenden Richtung erstreckt.

16. Vorrichtung (1) für Erzeugung elektrolysierter Flüssigkeit nach Anspruch 15, wobei die Kathoden-Nut (55e) eine V-Form hat, in der ein gebogener Teil (55f), in der Schichtungs-Richtung (Z) des geschichteten Körpers (51) gesehen, nachgelagert angeordnet ist.

## Revendications

1. Générateur de liquide électrolysé (1), comprenant :
une partie électrolytique (50) ayant un corps empilé (51) dans lequel un film conducteur (56) est empilé pour être intercalé entre une cathode (55) et une anode (54), la partie électrolytique (51) étant conçue pour électrolyser un liquide ; et
un logement (10) dans lequel est disposée la partie électrolytique, dans lequel
le logement (10) comporte un canal (11) ayant un orifice d'entrée (111) dans lequel s'écoule un liquide fourni à la partie électrolytique (50) et un orifice de sortie (112) duquel s'écoule en sortie un liquide électrolysé produit dans la partie électrolytique (50), et ayant une direction d'écoulement de liquide (X) dans une direction sécante à une direction d'empilement (Z) du corps empilé (51),
la partie électrolytique (50) comporte une rainure (52) débouchant dans le canal (11) et ayant une interface (58) entre le film conducteur (56) et la cathode (55) et une interface (57) entre le film conducteur (56) et l'anode (54), les interfaces (58, 57) étant au moins partiellement exposées,
**caractérisé en ce que**
le générateur de liquide électrolysé (1) comporte un espace (S) entre l'une au moins parmi une périphérie extérieure (55c) de la cathode (55) et une périphérie extérieure (54a) de l'anode (54), et une surface intérieure (22a) du logement (10) quand on l'observe dans la direction d'écoulement (X) du liquide, dans lequel la périphérie extérieure (55c) de la cathode (55) est une surface latérale de la cathode (55) et la périphérie extérieure (54a) de l'anode (54) est une surface latérale de l'anode (54).

2. Générateur de liquide électrolysé (1) selon la revendication 1, dans lequel l'espace (S) comporte un premier espace (S1) entre la périphérie extérieure (55c) de la cathode (55) et la surface intérieure (22a) du logement (10).

3. Générateur de liquide électrolysé (1) selon la revendication 1 ou 2, dans lequel l'espace (S) comporte un deuxième espace (S2) entre la périphérie extérieure (54a) de l'anode (54) et la surface intérieure (22a) du logement (10).

4. Générateur de liquide électrolysé (1) selon l'une quelconque des revendications 1 à 3, dans lequel la périphérie extérieure (55c) de la cathode (55) fait saillie à partir de la périphérie extérieure (54a) de l'anode (54) dans la direction sécante à la direction d'empilement (Z).

5. Générateur de liquide électrolysé (1) selon la revendication 4, dans lequel l'espace (S) comporte un troisième espace (S3) plus proche de l'anode (54) dans la direction d'empilement (Z) que la cathode (55).

6. Générateur de liquide électrolysé (1) selon la revendication 4 ou 5, dans lequel la périphérie extérieure (56a) du film conducteur (56) fait saillie à partir de la périphérie extérieure (54a) de l'anode (54) dans la direction sécante à la direction d'empilement (Z).

7. Générateur de liquide électrolysé (1) selon l'une quelconque des revendications 1 à 6, dans lequel l'espace (S) est disposé au moins autour d'une direction longitudinale (X) du corps empilé (51).

8. Générateur de liquide électrolysé (1) selon l'une quelconque des revendications 1 à 7, dans lequel le logement (10) comporte une saillie de logement (221) qui fait saillie en direction du corps empilé (51) sur la surface intérieure (22a) du logement (10) au niveau d'une partie qui fait face à une périphérie extérieure (51a) du corps empilé (51).

9. Générateur de liquide électrolysé (1) selon la revendication 8, dans lequel la cathode (55) comporte un creux de cathode (55d) au niveau d'une partie de la périphérie extérieure (55c) de la cathode (55), la partie correspondant à la saillie de logement (221).

10. Générateur de liquide électrolysé (1) selon la revendication 8 ou 9, dans lequel le film conducteur (56) comporte un creux de film conducteur (56b) au niveau d'une partie du film conducteur (56), la partie correspondant à la saillie de logement (221).

11. Générateur de liquide électrolysé (1) selon l'une quelconque des revendications 1 à 10, dans lequel la rainure (52) comprend une rainure de film conducteur (56c) disposée sur le film conducteur (56) et une rainure d'électrode (55e) disposée sur l'une au moins parmi la cathode (55) ou l'anode (54) et communiquant avec la rainure de film conducteur (56c), et
la rainure de film conducteur (56c) et la rainure d'électrode (55e) ont des formes différentes quand on les observe le long de la direction d'empilement (Z) du corps empilé (51).

12. Générateur de liquide électrolysé (1) selon la revendication 11, dans lequel le film conducteur (56) et l'une au moins parmi la cathode (55) et l'anode (54) sont empilés afin de présenter une intersection (59) dans laquelle une périphérie extérieure (66d) de la rainure de film conducteur (56c) et une périphérie extérieure (55g) de la rainure d'électrode (55e) sont sécantes quand on les observe le long de la direction d'empilement (Z) du corps empilé (51).

13. Générateur de liquide électrolysé (1) selon la revendication 11 ou 12, dans lequel la rainure de film conducteur (56c) s'étend dans une direction sécante à la direction d'écoulement (X) du liquide.

14. Générateur de liquide électrolysé (1) selon la revendication 13, dans lequel la rainure de film conducteur (56c) s'étend dans une direction orthogonale à la direction d'écoulement (X) du liquide.

15. Générateur de liquide électrolysé (1) selon l'une quelconque des revendications 11 à 14, dans lequel la rainure d'électrode comporte une rainure de cathode (55e) disposée sur la cathode (55), la rainure de cathode (55e) s'étendant dans la direction sécante à la direction d'écoulement (X) du liquide.

16. Générateur de liquide électrolysé (1) selon la revendication 15, dans lequel la rainure de cathode (55e) a une forme en V dans laquelle une partie courbée (55f) est disposée en aval quand on l'observe le long de la direction d'empilement (Z) du corps empilé (51).
